# EUROPÄISCHE PATENTANMELDUNG

(11) **EP 4 840 831 A1**
(43) Veröffentlichungstag der Anmeldung: **18.11.2026**
(21) Anmeldenummer: 25290018.8
(22) Anmeldetag: 15.05.2025
(51) Int. Cl.: C03C 8/02, C03C 8/04, C03C 8/14, C03C 17/00, C03C 17/04

(54) **SCHEIBENFÖRMIGES GLASELEMENT, DESSEN VERWENDUNG UND HAUSGERÄT UMFASSEND EIN SOLCHES GLASELEMENT**

(71) Anmelder: SCHOTT AG, 55122 Mainz (DE); SCHOTT VTF SAS, 57870 Troisfontaines (FR)
(72) Erfinder: Hovhannisyan, Martun, 55122 Mainz (DE); Kempkes, Christian, 55122 Mainz (DE); Titow, Denis, 55122 Mainz (DE); Pierron, Vincent, 57870 Troisfontaines (FR)
(74) Vertreter: Schott Corporate IP

(57) **Zusammenfassung**

Die vorliegende Offenbarung betrifft allgemein das Gebiet der scheibenförmigen Glaselemente mit zwei Seitenflächen und einer umlaufenden Kantenfläche, die auf einer Seitenfläche wenigstens eine mittels Erwärmen aufgebrachte Beschichtung umfasst. Weitere Aspekte betreffen die Verwendung eines solchen Glaselements sowie ein Haushaltsgerät, welches ein solches Glaselement umfasst.

## Beschreibung

### Gebiet der Erfindung

Die vorliegende Offenbarung betrifft allgemein das Gebiet der scheibenförmigen Glaselemente mit zwei Seitenflächen und einer umlaufenden Kantenfläche, die wenigstens auf einer Seite wenigstens eine mittels Erwärmen aufgebrachte Beschichtung umfassen, sowie deren Verwendung sowie ein Hausgerät umfassend ein solches Glaselement.

### Hintergrund der Erfindung

Die vorliegende Offenbarung betrifft insbesondere die Bereitstellung von scheibenförmigen Glaselementen mit einer rauen, haptischen Oberfläche, welche bei der Verwendung des Glaselements in einem Hausgerät an dessen Außenseite angeordnet ist.

Eine haptische Glasoberfläche kann grundsätzlich durch einen Ätzprozess z.B. mit Flusssäure erzeugt werden, was jedoch nicht umweltfreundlich ist und aufgrund hoher Produktionsauflagen auch zu hohen Produktionskosten führt. Dennoch zeichnen sich mattgeätzte Glasoberflächen durch eine gleichmäßige, optisch ansprechende und haptisch sehr angenehme Oberfläche aus.

Ersatzweise werden raue Oberflächen eines Glaselements auch mit einer Beschichtung erzeugt.

Scheibenförmige Glaselemente, die ein scheibenförmiges Glassubstrat sowie wenigstens eine Beschichtung, welche auf wenigstens einer Seite des Glassubstrats aufgebracht worden ist, sind seit langem bekannt. Insbesondere ist es auch bekannt, Beschichtungen, welche mittels Erwärmen aufgebracht werden, also solche Beschichtungen, welche eingebrannt werden, also thermisch fixiert und/oder fest mit dem entsprechenden Glassubstrat verbunden werden, auf ein Glassubstrat bzw. wenigstens eine Seitenfläche eines solchen Glassubstrats aufzubringen. Es ist auch bekannt, solche Beschichtungen mit einer rauen Oberfläche herzustellen, beispielsweise, um Anhaftungen an Unterlagsplatten bei der Herstellung solcher Glaselemente zu vermeiden. Insbesondere können auf diese Weise auch raue Beschichtungen hergestellt werden.

Bekannte Glaselemente mit einer mittels Erwärmen aufgebrachten Beschichtung, welche rau ausgebildet ist, beschreibt beispielsweise die Patentschrift EP 3 169 638 B1. Diese sieht ein Verfahren vor, bei welchem Beschichtungen auf den beiden Seitenflächen eines Substrats aus Glas oder Glaskeramik aufgebracht werden und wobei das Aufbringen der Beschichtung jeweils einen Erwärmungsschritt umfasst. Die erste aufgebrachte Beschichtung ist dabei glasbasiert ausgebildet und liegt beim Einbrand der zweiten mittels Erwärmung aufgebrachten Beschichtung auf der gegenüberliegenden Seitenfläche des Substrats auf Erhebungen der ersten Beschichtung auf. Diese Erhebungen werden durch in die erste Beschichtung Integrierte Partikel erzielt, welche zu einem gewissen Teil (zwischen 10% und 70% ihres mittleren Durchmessers) aus der ersten Beschichtung herausragen. Auf diese Weise können sogar Glaselemente erhalten werden, welche auf beiden Seitenflächen jeweils mittels Erwärmen aufgebrachte Beschichtungen aufweisen. Die zuerst hergestellte Beschichtung ist allerdings durch die integrierten Partikel sehr rau ausgebildet, mit Rauheiten Rₐ beispielsweise im zweistelligen Mikrometerbereich. Da die Partikel nur partiell in die Beschichtung eingebettet vorliegen und teilweise sehr stark herausragen, bilden sie damit auch mögliche Angriffspunkte für eine Beschädigung der Beschichtung, da diese einem erhöhten mechanischen Angriff beispielsweise bei Kratz- oder Abriebbelastungen ausgesetzt sind.

Allgemein sind Beschichtungen, wenn sie als haptische Beschichtungen dienen und deshalb insbesondere so ausgestaltet sind, dass sie wenigstens einen Füllstoff umfassend Füllstoffpartikel aufweisen, aber bestimmten weiteren Anforderungen ausgesetzt, wie beispielsweise einer erhöhten Belastung mit abrasiven Kontakten, wie kratzenden Gegenständen oder sonstigen Abrasiva sowie alternativ oder zusätzlich auch Reinigungsmitteln und/oder Verunreinigungen. Es werden daher besondere Anforderungen an die mechanische und/oder chemische Beständigkeit solcher "Oberseiten"-/"Vorderseitenbeschichtungen" gestellt.

Daneben kann es auch gewünscht sein, dass die raue Beschichtung entweder opak ausgebildet ist, oder aber transparent.

Es besteht daher ein Bedarf an Glaselementen, welche auf beiden Seitenflächen jeweils wenigstens eine mittels Erwärmen aufgebrachte Schicht aufweisen, bei welchen die oben genannten Schwierigkeiten adressiert sind.

### Aufgabe der Erfindung

Die Aufgabe der Erfindung besteht in der Bereitstellung von Glaselementen, welche die Schwächen des Standes der Technik zumindest teilweise mindern. Weitere Aspekte der Erfindung betreffen die Verwendung eines solchen Glaselements und ein Hausgerät, welches ein solches Glaselement umfasst.

### Definitionen

Im Rahmen der vorliegenden Offenbarung gelten die folgenden Begriffsbestimmungen:
Unter einem Glassubstrat wird allgemein ein Formkörper aus oder umfassend Glas verstanden. Ein scheibenförmiges Glassubstrat kann entsprechend auch als Glasscheibe bezeichnet werden. Als Glaselement wird ein veredeltes Glassubstrat verstanden, also insbesondere eines, auf welchem bereits Beschichtungen und/oder allgemein sonstige Bearbeitungen der Oberfläche stattgefunden haben, wie ein Aufrauen oder Polieren. Die Seitenflächen (die auch einfach als "Seiten" bezeichnet werden können) und die umlaufende Kantenfläche des Glaselements und des Glassubstrats entsprechen dabei einander, d.h. wenn von einer Seitenfläche des Glaselements die Rede ist, entspricht diese der Seite des Glassubstrats, wobei das Glaselement dann noch zumindest bereichsweise eine Beschichtung und/oder eine sonstige Oberflächenbehandlung auf dieser Seite aufweisen kann.

Ein scheibenförmiger Formkörper ist im Rahmen der vorliegenden Offenbarung allgemein ein Formkörper, der zwei Seitenflächen, die einander gegenüberliegenden und im Rahmen üblicher Produktions- und Fehlertoleranzen zueinander vorzugsweise parallel sind, sowie eine umlaufende Kantenfläche aufweist, welche die beiden Seitenflächen miteinander verbindet. Allgemein ist die Dicke des scheibenförmigen Formkörpers dabei wenigstens eine Größenordnung kleiner als seine Länge und Breite. Ein scheibenförmiger Formkörper kann allgemein auch als Platte oder Scheibe bezeichnet werden. Länge und Breite des scheibenförmigen Formkörpers können in derselben Größenordnung liegen oder unterschiedlich sein, beispielsweise kann die Länge des scheibenförmigen Formkörpers größer sein als seine Breite. In diesem Falle könnte man den scheibenförmigen Formkörper auch als Band bezeichnen.

Unter einem Glas wird im Rahmen der vorliegenden Offenbarung allgemein ein anorganisches, nichtmetallisches und röntgenamorphes Material verstanden, welches üblicherweise durch einen Schmelzprozess aus einem Gemenge gewonnen wird und in einem Heißformgebungsprozess in die beabsichtige Form überführt wird, also im vorliegenden Fall in die einer Platte oder Scheibe oder eines Bandes. Dies kann durch übliche Heißformgebungsverfahren erfolgen, beispielsweise durch Floaten oder Ziehen.

Unter mittels Erwärmen aufgebrachten Beschichtungen werden im Rahmen der vorliegenden Offenbarung Beschichtungen verstanden, welche in einem nasschemischen Verfahren bzw. in einem sogenannten Flüssigbeschichtungsverfahren, also beispielsweise mittels Aufbringen einer Paste, auf ein Substrat aufgebracht und anschließend thermisch fixiert werden. Dabei wird zunächst als Vorläufer der eigentlichen Beschichtung eine Nassschicht erhalten, welche mittels wenigstens eines thermischen Schritts auf dem Substrat fixiert wird. Je nach der genauen Art des Materials kann vorgesehen sein, die Nassschicht nur zu trocknen; an einen Trocknungsschritt kann sich aber auch ein Schritt bei einer erhöhten Temperatur anschließen, welcher auch als "Einbrand" oder "Einbrennen" bezeichnet werden kann. Bei dieser erhöhten Temperatur kann es sich insbesondere um eine Temperatur von mehreren hundert Grad Celsius handeln, beispielsweise um Temperaturen von 600°C oder mehr. Ein Trocknungsschritt kann vorteilhaft sein, weil auf diese Weise flüssige Bestandteile des flüssigen Beschichtungsmaterials, beispielsweise einer Paste, weitgehend aus der Nassschicht entfernt werden können, wie beispielsweise Lösungsmittel und/oder sonstige Medien. Ein Trocknungsschritt ist aber nicht zwingend erforderlich, sondern es kann auch gleich ein Schritt des Erwärmens bei erhöhten Temperaturen von mehreren hundert Grad Celsius erfolgen. Auch kann vorgesehen sein, vor dem sogenannten Einbrand oder Einbrennen eine andere Art der Fixierung als ein thermisches Trocknen vorzunehmen.

Unter einer glasbasierten Beschichtung wird im Rahmen der vorliegenden Offenbarung allgemein eine Beschichtung verstanden, welche wenigstens ein SiO₂-haltiges Bindemittel umfasst. Eine spezielle, bevorzugte Ausführung einer glasbasierten Beschichtung kann insbesondere eine glasflussbasierte Beschichtung sein, insbesondere eine Emaillebeschichtung oder kurz Emaille. Darunter wird im Rahmen der Offenbarung eine Beschichtung umfassend einen Glasfluss oder eine Glasfritte verstanden sowie optional einen partikelbasierten Festkörper, wie beispielsweise einen Füllstoff oder ein Pigment. Unter einem Glasfluss oder synonym einer Glasfritte wird ein Stoff verstanden, welcher als Pulver aus oder umfassend Glas insbesondere einer Paste zugesetzt wird und so ausgestaltet ist, dass er beim Erwärmen aufschmilzt, das Substrat und die ggf. von der Paste/dem Beschichtungsmittel und entsprechend auch der aus der Paste bzw. dem Beschichtungsmittel resultierenden Nassschicht umfassten Partikel beispielsweise eines oder mehrere Füllstoffe und/oder eines oder mehrere Pigmente benetzt und sich mit dem Substrat verbindet, beispielsweise in Form einer sogenannten Schmelz-Reaktionszone. Die Glasfritte bzw. der Glasfluss bildet dabei eine Glasmatrix der Beschichtung, welche im Rahmen der vorliegenden Offenbarung ebenfalls als Glasfluss bzw. Glasfritte bezeichnet ist, bzw. allgemein als Bindemittel, weil diese Glasmatrix in der Regel dieselbe Zusammensetzung aufweist wie die Glasfritte/der Glasfluss (also das Bindemittel) und lediglich in der Beschichtung nicht mehr in Partikelform, sondern als zusammenhänge Matrix, vorliegt, welche die einzelnen Bestandteile der Beschichtung untereinander und mit dem Substrat verbindet. Das Substrat kann allgemein eine beliebige Zusammensetzung aufweisen; im Rahmen der vorliegenden Offenbarung handelt es sich dabei allerdings um ein Glassubstrat.

Unter einem Füllstoff wird im Rahmen der vorliegenden Offenbarung allgemein ein partikelbasierter (pulverförmiger), vorzugsweise anorganischer, Feststoff verstanden. Solche Füllstoffe werden Beschichtungsmitteln zugesetzt, um die Performance der resultierenden Beschichtung insbesondere in technischer Hinsicht zu verbessern, allgemein beispielsweise hinsichtlich der Kratzbeständigkeit und/oder der Abriebfestigkeit. Wenn im Rahmen der vorliegenden Offenbarung daher ausgeführt ist, dass eine Beschichtung einen Füllstoff umfasst, wird darunter verstanden, dass die Beschichtung Partikel umfasst, welche die Zusammensetzung des Füllstoffs aufweisen, beispielsweise die Zusammensetzung SiO₂. Füllstoffe sind in der Regel so ausgestaltet, dass sie, wie Pigmente, nicht mit der Beschichtungsmatrix der Beschichtung, in die sie eingebettet sind, reagieren und deren Partikel beim Einbrand weitgehend unverändert erhalten bleiben. Anders als Pigmente weisen sie aber in der Regel keine Eigenfärbung auf bzw. versehen die Beschichtung nicht mit einer bestimmten optischen Anmutung wie Farbort und/oder Effekten. Die den Füllstoff bildenden Partikel können auch einfach als "Füllstoffpartikel" bezeichnet werden.

In entsprechender Weise wird unter einem Pigment im Rahmen der vorliegenden Offenbarung ein partikelbasierter (pulverförmiger), vorzugsweise anorganischer, Feststoff verstanden, welcher einer Beschichtung eine bestimmte optische Anmutung, wie einen Farbort (weiß oder gefärbt) und/oder einen Effekt (beispielsweise einen sogenannten "Metallic-Effekt") verleiht. Entsprechend zum Füllstoff gilt auch hier, dass eine ein Pigment umfassende Beschichtung Partikel mit der Zusammensetzung des Pigments umfasst. Die das Pigment bildenden Partikel können auch als "Pigmentpartikel" bezeichnet werden. Allgemein kann das Pigment auch als ein pulverförmiger Farbkörper bezeichnet werden. Im Falle der vorzugsweise anorganischen, nichtmetallischen Pigmente werden diese zuweilen als "keramische Farbkörper" bezeichnet. Unter diesem Begriff wird hier entsprechend ein anorganisches, nichtmetallisches Pigment verstanden, welches auch als "keramisches Pigment" bezeichnet werden kann. Entsprechende Pigmente können beispielsweise Metalloxide sein oder solche umfassen, beispielsweise sogenannte "Spinellpigmente" o.ä., welche dem Fachmann bekannt sind.

Allgemein weisen partikelbasierte Feststoffe, welche Bestandteile der Beschichtung nach Ausführungsformen sind oder sein können, eine Partikelgrößenverteilung auf. Sofern im Rahmen der vorliegenden Offenbarung auf die Partikelgröße abgestellt wird, handelt es sich bei dem angegeben Wert um den volumenäquivalenten Kugeldurchmesser des Partikels. Bei der durchschnittlichen Partikelgröße wird allgemein auf den d₅₀-Wert, bezogen auf den volumenäquivalenten Kugeldurchmesser, abgestellt.

Sofern im Rahmen der vorliegenden Offenbarung auf eine Erweichungstemperatur der Beschichtungsmatrix abgestellt wird, handelt es sich dabei um die Temperatur, bei welcher das die Beschichtungsmatrix bildende Bindemittel so plastisch ist, dass es die von der Beschichtung umfassten Partikel umhüllt und das Substrat benetzt. Im Falle eines glasbasierten Bindemittels kann es sich dabei allgemein um die sogenannte Erweichungstemperatur des Glases des entsprechenden Bindemittels handeln, also um die Erweichungstemperatur der Glasfritte/des Glasflusses. Die Erweichungstemperatur ist diejenige Temperatur, bei welcher das Glas eine Viskosität von 10^{7,6} dPas aufweist.

### Zusammenfassung der Erfindung

Die Aufgabe der Erfindung wird gelöst durch den Gegenstand der unabhängigen Ansprüche. Spezielle und/oder bevorzugte Ausführungsformen finden sich in der Beschreibung, den Zeichnungen und/oder den unabhängigen Ansprüchen der Offenbarung.

Die Offenbarung betrifft damit allgemein ein scheibenförmiges Glaselement, umfassend ein scheibenförmiges Glassubstrat, mit zwei Seitenflächen und einer umlaufenden Kantenfläche, vorzugsweise gebildet aus oder umfassend Kalk-Natron-Glas, welches wenigstens eine mittels Erwärmen aufgebrauchte Beschichtung, vorzugsweise eine Emaille-Beschichtung, aufweist, die auf wenigstens einer Seitenfläche des scheibenförmigen Glassubstrats zumindest in einem Bereich angeordnet ist. Die wenigstens eine Beschichtung umfasst wenigstens einen Füllstoff umfassend temperaturstabile Partikel mit einer durchschnittlichen Partikelgröße (vorzugsweise angegeben als d₅₀) hat eine Schichtdicke, wobei bevorzugt das Verhältnis (V) der durchschnittlichen Partikelgröße (P) zur Schichtdicke (d) der wenigstens einen Beschichtung $V = \frac{P}{d}$ höchstens 9, vorzugsweise höchstens 6, besonders bevorzugt höchstens 1,3, und wenigstens 0,01 beträgt. Das Verhältnis ist dimensionslos; die Partikelgröße und die Schichtdicke werden im Rahmen der vorliegenden Offenbarung jeweils in µm angegeben. Der Reibkoeffizient des Glaselements in dem Bereich, in welchem die wenigstens eine Beschichtung angeordnet ist, beträgt höchstens 0,7, bevorzugt höchstens 0,6, besonders bevorzugt weniger als 0,6, ganz besonders bevorzugt höchstens 0,5, und vorzugsweise wenigstens 0,07, bevorzugt wenigstens 0,1, besonders bevorzugt wenigstens 0,2. Er kann werden bestimmt in einem Testverfahren mit einem Tribometer in einem sogenannten Pin-on-disc-Verfahren, wie dies beispielsweise in DIN 50324-07 und/oder in ISO 18533 beschrieben ist.

Diese Ausgestaltung des Glaselements ist sehr vorteilhaft. Auf diese Weise wird nämlich ein Glaselement bereitgestellt, bei welchem die wenigstens eine Beschichtung als Vorderseiten- bzw. Oberseitenbeschichtung dienen kann, also im direkten Kontakt mit einem Anwender bzw. Benutzer stehen kann. Durch den geringen Reibkoeffizienten von höchstens 0,7, bevorzugt höchstens 0,6, besonders bevorzugt weniger als 0,6, ganz besonders bevorzugt höchstens 0,5, und vorzugsweise wenigstens 0,07, bevorzugt wenigstens 0,1, besonders bevorzugt wenigstens 0,2 ist dies möglich, ohne dass es zu den bekannten Nachteilen des Standes der Technik kommt, die insbesondere in einer geringen mechanischen Beständigkeit des Glaselements bzw. der wenigstens einen auf das Glaselement bzw. -substrat angeordneten Beschichtung resultieren, also in deren geringen Beständigkeit gegen Kratz- und/oder Abriebbelastungen.

Die Beständigkeit der wenigstens einen Beschichtung gegenüber Kratz- oder Abriebbelastung, die ja wie ausgeführt im Vergleich zu rauen Beschichtungen des Standes der Technik hier nach Ausführungsformen verbessert sein kann, kann im Rahmen der vorliegenden Offenbarung insbesondere getestet werden In einem Messaufbau basierend auf dem Messgerät HR 100 der Firma Karl Süß. Der Test wird dabei in Anlehnung an die DIN ISO 1518-1 durchgeführt, wobei die Unterschiede zum Test der DIN bestehen in
- dem Material der verwendeten Prüfspitze: Es werden polymerbasierte Spitzen verwendet, nämlich PEEK (Polyethylenetherketon) und/oder POM (Polyoxymethylen).
- dem Durchmesser der Prüfspitze: Die Prüfspitzen haben vorliegende Durchmesser zwischen 1 mm und 5 mm (PEEK) bzw. 1 mm bis 5 mm (POM).
- der Probengeometrie. Diese entspricht nicht der in der Norm genannten Geometrie; es werden im Rahmen der vorliegenden Offenbarung Proben mit einer Größe von 3 cm * 5 cm verwendet.

Der Test wird wie folgt durchgeführt: Es wird das Prüfgerät HR 100 von der Firma Karl Süß verwendet. Die Probe wird auf den Probentisch gelegt, wobei die Seite mit der wenigstens einen Beschichtung nach oben zeigt (in Richtung der Prüfspitze). Das Gerät verfügt über einen Verfahrhebel, der dazu eingerichtet ist, die Prüfspitze vor- und rückwärts über die Probenoberfläche zu bewegen. Die Prüfspitze wird eingebaut und mit einer Feststellschraube fixiert. Das Gerät verfügt weiterhin über eine Haltung für Auflagegewichte, so dass 200 g Last auf die Prüfspitze und damit letztlich auf die Probe einwirken.

Der Test wird wie folgt durchgeführt und bewertet: Jede Prüfspitze (1 mm und 5 mm Durchmesser pro Material) wird zwei Mal an zwei unterschiedlichen Stellen auf der wenigstens einen Beschichtung hin- und herbewegt. Die anschließend erhaltenen Testbilder werden mit einer Kamera aufgenommen und die Probe bewertet:
- Keine Kratzspur sichtbar: 0
- Kratzspur sichtbar, kann aber abgereinigt werden: 1
- Stark sichtbare Kratzspur: 2

Nach einer Ausführungsform der Offenbarung ist das Ergebnis im Kratztest wie vorstehend ausgeführt höchstens 1, vorzugsweise 0.

Bislang war ein solches Glaselement noch nicht bekannt. Vielmehr waren vorbekannte Glaselemente, welche wenigstens eine mittels Erwärmen aufgebrachte Beschichtung umfassend wenigstens einen Füllstoff aufwiesen, in der Regel sowohl rau ausgebildet, was die Angriffsfläche beispielsweise für Verschmutzungen erhöht als auch aufgrund dieser Rauheit entsprechend anfällig gegenüber mechanischen Angriffen. Durch das Einstellen des Reibkoeffizienten innerhalb der vorgenannten Spezifikationen ist es aber nun auf überraschend einfache Art und Weise möglich, eine matte, haptisch leicht raue Beschichtung als Oberseiten- bzw. Vorderseitenbeschichtung auszubilden. Durch das Einstellen des Reibkoeffizienten wie ausgeführt entsteht eine zwar haptisch wahrnehmbare, allerdings auch dennoch überraschenderweise "rutschige" Beschichtung, also eine Beschichtung mit geringer Gleitreibung.

Die Beschichtung kann dabei auf unterschiedliche Weise ausgestaltet sein, je nach den genauen Bedürfnissen, die sich bei der Herstellung und/oder Verwendung des Glaselements spezifisch ergeben.

Die Bestimmung des Reibkoeffizienten, welcher auch als "friction coefficient" bezeichnet werden kann, erfolgt in einer Testprozedur an einer beschichteten Probe mit den Abmessungen 30*30 mm². Der Reibkoeffizient wird in einem sogenannten Tribometer, beispielsweise einem Tribometer "Pin-on-Disc" von CSM Instruments, bestimmt, wobei die Probe unter einem Reibpartner, bei welchem es sich um eine Korund-Kugel (auch als "sapphire ball" bezeichnet) handelt, rotiert. Die Kugel hat einen Durchmesser von 6 mm, die Relativgeschwindigkeit zwischen Kugel und Probe bzw. Probenoberfläche beträgt 0,1 cm/s. Auf die Probe wirkt eine Normalkraft F_{N} von 1N. Auf diese Weise wirkt eine seitliche Kraft, die Reibkraft F_{R} auf die Probe bzw. deren Oberfläche, welche bestimmt werden kann. Wie hoch diese ist, hängt vom Reibkoeffizienten, µ_{g}, ab.

Dieser ergibt sich nach der folgenden Formel: ${μ}_{G} = \frac{{F}_{R}}{{F}_{N}}$

Nur die erste Umdrehung der Probe und die dabei bestimmte Reibkraft wird zur Bestimmung des Reibkoeffizienten verwendet, da sich die Probenoberfläche nach dieser ersten Umdrehung und dem entsprechenden Kontakt zwischen der Kugel und der Probenoberfläche verändert haben kann. Die Prüfung erfolgt nach oder in Anlehnung an DIN 50324-07 bzw. ISO 18535.

Im Rahmen der vorliegenden Offenbarung werden die Begriffe des Reibkoeffizienten, des Reibungskoeffizienten, des coefficient of friction und des friction coefficient synonym verwendet. Sie beziehen sich alle auf µ_{G}, wie nach der vorstehenden Formel definiert.

Nach einer Ausführungsform des Glaselements ist die Seitenfläche des Glassubstrats (bzw. in entsprechender Weise des Glaselements), auf welcher die wenigstens eine mittels Erwärmen aufgebrachte Beschichtung zumindest in einem Bereich angeordnet ist, als betriebliche Vorderseite oder Oberseite eines Hausgeräts ausgebildet und/oder ist bestimmt, in einem Hausgerät als Vorderseite oder Oberseite des Glaselements/- substrats verwendet zu werden.

Unter der betrieblichen Vorderseite oder Oberseite eines Hausgeräts bzw. eines Glaselements, welches in einem Hausgerät verwendet wird, wird die Seite verstanden, welche betrieblich dem Anwender/Benutzer des entsprechenden Hausgeräts zugewandt ist. Diese betriebliche Vorder- oder Oberseite kann auch vor der entsprechenden Montage in das Hausgerät eindeutig zugeordnet werden, da das für den Einbau in ein Hausgerät bestimmte Glaselement (beispielsweise für den Einsatzzweck als Bedienblende und/oder Abdeckscheibe) üblicherweise wenigstens eine weitere Beschichtung aufweist, insbesondere ausgebildet als Schrift, wie beispielsweise ein Logo. Die betriebliche Vorderseite oder Oberseite ist also die Seite, von der aus die entsprechende Schrift einer weiteren Beschichtung, welche auf einer Seite des Glaselements/-substrats angeordnet ist, lesbar ist.

Nach einer Ausführung kann vorgesehen sein, dass das Verhältnis (V) der durchschnittlichen Partikelgröße (P) zur Schichtdicke (d) der wenigstens einen Beschichtung $V = \frac{P}{d}$ höchstens 9, bevorzugt höchstens 6, besonders bevorzugt höchstens 1,3, und wenigstens 0,01 beträgt. Das Verhältnis ist allgemein dimensionslos; die Partikelgröße und die Schichtdicke werden im Rahmen der vorliegenden Offenbarung allgemein jeweils in µm angegeben. Dies bietet den Vorteil, dass die Einstellung einer haptischen Anmutung in relativ weiten Grenzen variiert werden kann.

Nach einer weiteren Ausführungsform kann beispielsweise vorgesehen sein, dass das Glaselement eine Trübung, bestimmt mit dem Messgerät HAZE-GUARD plus der Firma BYK-Gardener, zwischen größer als 15 und weniger als 95, vorzugsweise größer als 15 und weniger als 60, aufweist, und/oder eine Klarheit (clarity), bestimmt mit dem Messgerät HAZE-GUARD plus der Firma BYK-Gardener, von wenigstens 6 und höchstens 50, vorzugsweise von wenigstens 15 und höchstens 35, aufweist. Die Trübung (Haze) und/oder die Klarheit (clarity) des Glaselements werden dabei vorzugsweise in dem Bereich bestimmt, in welchem die Beschichtung angeordnet ist, wobei vorzugsweise vorgesehen sein kann, dass diese Werte so bestimmt werden, dass im Messbereich lediglich das Glassubstrat und die wenigstens eine Beschichtung angeordnet sind. Dies kann neben den Eigenschaften der Trübung und/oder der Klarheit auch andere vorzugsweise optische Eigenschaften des Glaselements betreffen, wie beispielsweise die Transmission bzw. den Transmissionsgrad. Die Bestimmung der Trübung (haze) erfolgt nach ASTM D1003. Es wird darauf hingewiesen, dass die "Klarheit" (clarity) der Prozentsatz an Strahlen ist, die einen kleinen Streuwinkel von weniger als 2,5° von der Strahlrichtung aufweisen und dieser Wert auch als Kleinwinkelstreuung bezeichnet wird. Diese Messungen können allgemein mit einem geeigneten Messgerät durchgeführt werden, wie beispielsweise das beispielhaft vorstehend angegebene. Aber auch andere Messaufbauten sind dafür prinzipiell geeignet, die beispielsweise gleichzeitig die Kleinwinkelstreuung und die in einem weiteren Winkel gestreute Strahlung detektieren, sodass der entsprechende Prozentsatz ermittelt und als "Klarheit" (clarity) angegeben werden kann.

Für Ausführungsformen mit der wenigstens einen Beschichtung als transparente Beschichtung, worunter insbesondere verstanden wird, dass die wenigstens eine Beschichtung kein Absorptionspigment umfasst, beträgt die Transmission vorzugsweise mehr als 60 %, die Trübung weniger als 95 und die Klarheit (clarity) wenigstens 6 oder mehr.

Für Ausführungsformen mit der wenigstens einen Beschichtung als opake Beschichtung, worunter insbesondere verstanden wird, dass die wenigstens eine Beschichtung ein Absorptionspigment umfassen, beträgt die Transmission weniger als 5 %, die Trübung (Haze) mehr als 90 und die Klarheit (clarity) mehr als 35.

Es ist nämlich durch die besonderen Eigenschaften des Glaselements allgemein mit der wenigstens einen Beschichtung, welche den Reibkoeffizient wie vorstehend beschrieben aufweist, nun möglich, gleichzeitig einen Bereich bereitzustellen, welcher allgemein haptisch wahrnehmbar ist, aber dennoch alle Anforderungen an eine hohe mechanische Beständigkeit und gute Reinigbarkeit, die gemeinhin mit Glaselementen verbunden werden, zu realisieren. Vorteilhaft kann dies durch eine Einstellung des Verhältnisses V von Schichtdicke zur durchschnittlichen Partikelgröße unterstützt werden, was aber nicht zwingend notwendig ist, solange der Reibkoeffizient in den vorliegend spezifizierten Grenzen liegt. Damit ist es beispielsweise möglich, ein Glaselement zu erhalten, welches den Eindruck sogenannter "satinierter Glasscheiben" aufweist, also einen matten Eindruck. Auf diese Weise wird eine starke gerichtete Reflexion unterbunden, was die Bedienersicherheit erhöht für den Fall, dass das Glaselement beispielsweise als Bedienblende dient.

Dies ist ein deutlicher Vorteil gegenüber bekannten Glaselementen, welche als "satiniertes Glas" zum Einsatz kommen. Der matte Eindruck wurde bislang nämlich entweder durch eine raue Beschichtung, die aber wegen der vorstehend ausführlich geschilderten Nachteile nicht dem Benutzer zugewandt war, hervorgerufen, sodass trotz eines matten Eindrucks noch immer eine starke Spiegelung an der glatten, den Benutzer/Anwender zugewandten Seite erfolgte, oder durch eine mechanische Behandlung der Oberfläche des Glassubstrats, beispielsweise durch Sandstrahlen, was aber die mechanische Festigkeit des Glaselements in Mitleidenschaft gezogen hat.

Vorteilhaft kann auf diese Weise damit durch das Glaselement nach Ausführungsformen beispielsweise eine Bedienblende geschaffen werden, welche durch die Ausgestaltung der wenigstens einen Beschichtung wie beschrieben beispielsweise gleichzeitig eine sehr gute Sichtbarkeit von hinter dem Glaselement angeordneten Anzeigeelementen gewährleistet und durch eine gezielte Einstellung der Oberfläche des Glaselements, eben durch die wenigstens eine Beschichtung, auf der Benutzerseite auch insgesamt den Bedienkomfort erhöht, indem beispielsweise Bedienbereiche haptisch erkennbar gestaltet sind. Dabei kann vorgesehen sein, dass die wenigstens eine Beschichtung bereichsweise in der Form aufgebracht ist, dass wenigstens einen Bereich einer Seitenfläche bedeckt, aber einen bestimmten anderen Bereich freilässt. Selbstverständlich können auch jeweils mehrere Bereiche bedeckt und unbedeckt sein, was letztlich eine Designfrage darstellt.

Es kann dabei vorgesehen sein, dass nach einer Ausführungsform die wenigstens eine Beschichtung kein Absorptionspigment umfasst und/oder dass das Glaselement eine Transmission von mehr als 60%, bevorzugt mehr als 75%, und weniger als 95 %, bevorzugt weniger als 92 %, besonders bevorzugt weniger als 90 % aufweist, bestimmt in einem Bereich des Glaselements, in welchem nur das Glassubstrat und die wenigstens eine Beschichtung angeordnet sind, aufweist. Hierbei wird bei der Bestimmung der Transmission des Glaselements wie ausgeführt diese in einem Bereich bestimmt, in welchem nur das Glassubstrat und die wenigstens eine Beschichtung angeordnet sind. Dies kann besonders bevorzugt sein, wenn das Glaselement gerade als Bedienblende für ein Haushaltsgerät verwendet werden soll, wo es vorteilhaft sein kann, dass für einen Betrachter, in diesem Falle also dem Anwender/Benutzer des betreffenden Haushaltsgeräts, hinter dem Glaselement angeordnete Elemente, beispielsweise Displays, gut wahrnehmbar sind. Im Rahmen der vorliegenden Anmeldung bezeichnet der Begriff der Transmission (synonym Gesamttransmission bzw. Totaltransmission) den Lichttransmissionsgrad τ_{Y} gemäß der Definition in DIN EN 410. Er basiert auf dem spektralen Lichttransmissionsgrad τ(λ), der mit der Augenempfindlichkeit V(λ) und einer Standardlichtquelle (D65) gewichtet ist. Die Standardlichtquelle D65 ist ebenfalls in der DIN EN 410 beschrieben und entspricht in etwa der Sonnenstrahlung. Die Bestimmung des spektralen Transmissionsgrades kann beispielsweise in Anlehnung an die ISO 15368 erfolgen, wobei vorliegend allerdings beachtlich ist, dass für den spektralen Transmissionsgrad im Rahmen der vorliegenden Anmeldung anders als in ISO 15368 auch die diffus gestreuten Anteile berücksichtigt werden. Ein entsprechender Messaufbau ist beschrieben im Zusammenhang mit Fig. 5 der vorliegenden Offenbarung.

Nach einer Ausführungsform des Glaselements weist die wenigstens eine Beschichtung einen Mittenrauwert, S_{B}, von größer 0,1 µm und bis höchstens 2,0 µm, bevorzugt bis höchstens 1,5 µm, auf. Der Mittenrauwert Sₐ ist dabei für eine bestimmte Fläche bestimmt, wobei es sich beim angegebenen Wert um den arithmetischen Mittenrauwert handelt. Dieser wird bestimmt, indem die Oberfläche in einem Flächenscan innerhalb der Messfläche abgetastet wird und sämtliche Höhen- und Tiefenunterschiede innerhalb dieser Messfläche aufgezeichnet werden. Anhand dieser Daten des Rauheitsverlaufs kann dann unter Berücksichtigung der gemessenen Fläche der entsprechende Wert der Rauheit angegeben werden.

Die Rauheit in den vorgenannten Grenzen ist aus verschiedenen Gründen vorteilhaft.

Mit einer Rauheit an der unteren Grenze des angegebenen Bereichs ist es noch immer möglich, eine haptisch wahrnehmbare wenigstens eine Beschichtung zu erhalten. Auf der anderen Seite ist die Rauheit geringer als bei bekannten Antihaft-Beschichtungen des Standes der Technik, was vorteilhaft sein kann, wenn die wenigstens eine Beschichtung beispielsweise als Vorderseitenbeschichtung ausgebildet ist, also im Gebrauch des Glaselements vom Endanwender berührt werden kann. Eine zu raue Beschichtung kann hier nämlich nachteilig sein.

Je nach der genauen Ausgestaltung der Rauheit der wenigstens einen Beschichtung kann vorgesehen sein, diese vorzugsweise auf der betrieblichen Vorderseite des Glaselements oder auf der betrieblichen Rückseite anzuordnen. Unter der betrieblichen Vorder- bzw. Rückseite wird im Rahmen der vorliegenden Offenbarung die Seite des Glaselements verstanden, welche im eingebauten Zustand des Glaselements dem Anwender zu- bzw. abgewandt ist. Je nach genauer Einbausituation kann die Vorderseite auch als Oberseite und die Rückseite auch als Unterseite bezeichnet werden.

Der angegebene Wert für die Rauheit ist dabei vorteilhaft, weil er einen Bereich definiert, welcher haptisch wahrnehmbar ist, und beispielsweise zur Kennzeichnung von Bedienbereichen und/oder der Mattierung der Oberfläche des Glaselements, beispielsweise zur Reduktion störender Lichtreflexe, dienen kann, aber gleichzeitig eben auch nicht mehr störend abrasiv wirkt bzw. eine Angriffsfläche für mechanische Angriffe bietet.

Nach einer weiteren Ausführungsform des Glaselements weist die wenigstens eine Beschichtung eine chemische Beständigkeit, bestimmt in einem Testverfahren auf chemische Beständigkeit, vorzugsweise mittels sauren und/oder salzigen wässrigen Prüflösungen, von höchstens 4 auf. Auf diese Weise ist eine gute Reinigbarkeit der Beschichtung und damit in entsprechender Weise des Glaselements sichergestellt, insbesondere mit handelsüblichen Reinigern.

Das Testverfahren auf chemische Beständigkeit erfolgt mit den folgenden Prüfsubstanzen:
1 wässrige Essiglösung (25%)
2 Zitronensäure (10%) in Wasser
4 wässrige Kochsalzlösung (1,4%)

Die genannten Prüfsubstanzen werden in einem ersten Test in kleinen Mengen von 2 g mit der Hilfe von Stempeln, die eine Silikonschaum-Platte mit den Abmessungen 20*20mm² und einer Dicke von 4 mm aufweisen, zur Simulation eines Fingerabdrucks auf den jeweiligen Prüfling aufgebracht, d.h. auf die mindestens eine Beschichtung. Anschließend erfolgt ein Einwirken der Substanz für 24 h bei Raumtemperatur, eine

Reinigung mit heißem Wasser und Spülmittel. Anschließend erfolgt eine Sichtprüfung auf eine Veränderung nach dem folgenden Bewertungsschlüssel:
1 keine sichtbare Veränderung
2 leichter sichtbarer Schatten
3 leichter sichtbarer Rand
4 leichter sichtbarer Fleck
5 starker sichtbarer Rand
6 starker sichtbarer Fleck

Eine Bewertung bis 4 ist in Ordnung, die stärkere sichtbare visuelle Beeinträchtigung nach Bewertungsschlüsseln 5 und 6 ist nicht akzeptabel.

Nach einem zweiten Test wird wie oben beschrieben verfahren, mit der Ausnahme, dass das Einwirken für eine Stunde bei 60°C in einem Trockenschrank erfolgt. Die vorstehende Bewertung gilt entsprechend.

Nach einer Ausführungsform ist die chemische Beständigkeit durch eine Bewertung der Beschichtung in dem beschriebenen Testverfahren von jeweils höchstens 4 gekennzeichnet.

Ein weiterer Vorteil des Glaselements nach Ausführungsformen, insbesondere mit dem Reibkoeffizient wie vorstehend ausgeführt, besteht darin, dass überraschenderweise die Auffälligkeit von Verschmutzungen, beispielsweise durch Fingerabdrücke, gegenüber bekannten Glaselementen des Standes der Technik mit rauen Oberflächen, sei es aufgrund von speziell ausgestalteten Beschichtungen oder aufgrund einer mechanischen Behandlung der Oberfläche des Glaselements beispielsweise durch Sandstrahlen verringert ist. Den Erfindern ist nicht ganz klar, woran dies liegt, vermuten allerdings, dass dies an der speziellen Ausgestaltung der wenigstens einen Beschichtung, insbesondere deren Gefüge, liegen könnte. Zwar kommt es bei der wenigstens einen Beschichtung bzw. dem Glaselement nach der vorliegenden Offenbarung in bekannter Weise zunächst zur Bildung eines Flecks durch einen Fingerabdruck, jedoch verschwindet dieser nach einer Zeit von selbst wieder. Dies ist sehr ungewöhnlich, allerdings auch sehr vorteilhaft, insbesondere, da Flecken aufgrund von Fingerabdrücken bekanntermaßen recht hartnäckig sind und sich teilweise nur sehr schwer wieder entfernen lassen. Die Auffälligkeit der Flecken kann dabei in einer üblichen Sichtprüfung in einem Lichtkasten beobachtet werden.

Das "Verschwinden" der Fingerabdrücke korreliert mit einer überraschend guten Reinigbarkeit der wenigstens einen Beschichtung bzw. In entsprechender Weise des Glaselements. Dies stellt einen großen Vorteil des Glaselements nach der Offenbarung dar, weil es auf diese Weise weniger fleckanfällig und daher auch weniger pflegeintensiv ist.

Die Erfinder vermuten, dass die wenigstens eine Beschichtung des Glaselements nach der vorliegenden Offenbarung nicht nur rau ausgebildet ist, was sich durch die Füllstoffpartikel, welche von der wenigstens einen Beschichtung umfasst sind, ergibt, sondern dass die Beschichtung auch eine gewisse Porosität aufweist, welche für das Ausbilden der Fleckunempfindlichkeit bzw. der guten Reinigbarkeit verantwortlich sein könnte.

Nach einer weiteren Ausführungsform ist das Glaselement so ausgebildet, dass es eine weitere Beschichtung aufweist, insbesondere eine mittels Erwärmen aufgebrachte weitere Beschichtung, vorzugsweise eine Emaille-Beschichtung, wobei die wenigstens eine Beschichtung und die weitere Beschichtung auf unterschiedlichen Seitenflächen des Glassubstrats (bzw. in entsprechender Weise des Glaselements) angeordnet sind.

Das Glaselement nach der vorliegenden Offenbarung ist für eine solche Ausführungsform auf besonders einfache Weise sehr gut geeignet. Wie vorstehend zur Diskussion des Standes der Technik ausgeführt, bestanden lange Zeit Schwierigkeiten darin, auf den gegenüberliegenden Seiten eines Glaselements jeweils mittels Erwärmen aufgebrachte Beschichtungen, beispielsweise Emaillebeschichtungen, bereitzustellen. Mittlerweile existieren hierfür Lösungen, die aber im Hinblick auf die mechanische Beständigkeit wenigstens einer dieser Beschichtungen und/oder hinsichtlich deren sonstigen Eigenschaften, beispielsweise dem Reibkoeffizienten, nachteilig sind.

Das Glaselement nach der vorliegenden Offenbarung überwindet, wie ausgeführt, diese Nachteile zumindest teilweise und stellt ein Glaselement bereit, welches eine seidenmatte optische Anmutung bzw. Haptik wenigstens in einem Bereich einer Seitenfläche des Glaselements aufweist (also in dem Bereich, in welchem die wenigstens eine Beschichtung angeordnet ist). Die wenigstens eine Beschichtung ist aber weiterhin ebenfalls so ausgestaltet, dass damit eine beidseitige Belegung mit Beschichtungen, die mittels Erwärmen aufgebracht sind, ebenfalls möglich ist. Mit anderen Worten ist trotz der vorteilhaften geringen Gleitreibung bzw. Haftreibung der wenigstens einen Beschichtung dennoch eine entsprechende Enthaftungswirkung der wenigstens einen Beschichtung beim Einbrand einer nachfolgenden, auf der gegenüberliegenden Seite zur wenigstens einen Beschichtung angeordneten weiteren Beschichtung gegeben.

Es hat sich gezeigt, dass es mit einer Ausgestaltung der wenigstens einen Beschichtung umfassend wenigstens einen Füllstoff umfassend temperaturstabile Partikel mit einer durchschnittlichen Partikelgröße (vorzugsweise angegeben als d₅₀), wobei das Verhältnis (V) der durchschnittlichen Partikelgröße (P) zur Schichtdicke (d) der wenigstens einen Beschichtung, V=P/d, höchstens 9, vorzugsweise höchstens 6, besonders bevorzugt höchstens 1,3, und wenigstens 0,01, möglich ist, eine beidseitige Beschichtung mit jeweils mittels Erwärmen aufgebrachten Beschichtungen auf den gegenüberliegenden Seitenflächen des Glassubstrats/-elements zu erhalten.

Überraschenderweise hat sich gezeigt, dass es möglich ist, einen "anti-sticking"-Effekt, also einen Antihafteffekt, zu erzielen, wenn die Beschichtung einen Füllstoff umfassend Füllstoffpartikel umfasst, die im Vergleich zur Schichtdicke der Beschichtung recht klein ausgebildet sind, was durch das Verhältnis von der durchschnittlichen Partikelgröße zur Schichtdicke der wenigstens einen Beschichtung beschrieben ist.

Obwohl also keine großen als "Abstandshalter" über die Beschichtung herausragenden Partikel in der wenigstens einen Beschichtung nach der vorliegenden Offenbarung vorliegen, zeigt sich dennoch, dass auf diese Weise ein Antihafteffekt während des Einbrennvorgangs erzielt wird.

Hierzu wird vermutet, dass dieser Antihafteffekt durch den Einsatz des wenigstens einen Füllstoffs erzielt wird, welcher zwar die Erweichungstemperatur des Bindemittels nicht direkt beeinflusst, aber die resultierende Erweichungstemperatur der aus dem Beschichtungsmaterial resultierenden Beschichtung, welche ja neben dem Bindemittel noch weitere Bestandteile, nämlich insbesondere wenigstens einen Füllstoff, umfasst. Mit anderen Worten kann offensichtlich allgemein durch die Zugabe eines geeigneten Füllstoffs die "Klebrigkeit" einer Beschichtung während eines thermischen Einbrennvorgangs reduziert werden. Die temperaturstabilen Partikel des Füllstoffs bilden damit in gewisser Weise ebenfalls eine bestimmte Struktur der Beschichtung aus, welche sich aber von der vorstehend beschriebenen, sehr rauen Struktur der bekannten Beschichtungen mit Antihaft-Effekt unterscheidet, wie ja auch weiter oben bereits diskutiert wurde. Dafür ist es allerdings besonders vorteilhaft, wenn zumindest ein Teil der Füllstoffpartikel auch an der Oberfläche der wenigstens einen Beschichtung angeordnet sind. Die Partikel können dabei aus der Oberfläche der wenigstens Beschichtung herausragen; dies ist aber nicht zwingend erforderlich. Insbesondere können die Füllstoffpartikel auch gänzlich oder zumindest teilweise von der Beschichtungsmatrix umhüllt vorliegen. Eine partielle Umhüllung kann insbesondere dann vorliegen, wenn die Füllstoffpartikel an der Oberfläche angeordnet sind.

Die Erfinder vermuten allerdings, dass diese Anordnung der Füllstoffpartikel an der Oberfläche zu einer hohen Gleit- bzw. Haftreibung führt, also zu einem entsprechend hohen Reibkoeffizienten.

Überraschend hat sich allerdings gezeigt, dass auch mit der wenigstens einen Beschichtung nach der vorliegenden Offenbarung und trotz deren Ausgestaltung mit einem niedrigeren Reibkoeffizienten wie vorstehend ausgeführt eine beidseitige Belegung des Glaselements/-substrat mit mittels Erwärmen aufgebrachten Beschichtungen möglich ist. Dabei ist die Ausgestaltung der Beschichtung hinsichtlich des Reibkoeffizienten von besonderer Bedeutung, weniger das konkrete Verhältnis der durchschnittlichen Partikelgröße zur Schichtdicke der wenigstens einen Beschichtung.

Nach einer Ausführungsform des scheibenförmigen Glaselements kann allgemein vorgesehen sein, dass die wenigstens eine Beschichtung als Emaillebeschichtung umfassend einen Glasfluss ausgebildet ist, wobei der Glasfluss bevorzugt Bi₂O₃ und ZnO umfasst,

besonders bevorzugt aufweisend eines oder beide der folgenden Merkmale:
- der Glasfluss weist ein Verhältnis von Bi₂O₃/ZnO, bezogen auf den Gewichtsanteil des Glasflusses, von mehr als 1,3 auf, bevorzugt von wenigstens 1,5, insbesondere von wenigstens 5, und vorzugsweise von weniger als 35, bevorzugt von weniger als 30, auf,
- der Glasfluss weist ein Verhältnis von der Summe von SiO₂ und Bi₂O₃ zu Zno, (SiO₂+Bi₂O₃)/ZnO, von wenigstens 4und vorzugsweise höchstens 45 auf.

Ganz allgemein kann also nach dieser Ausführungsform die wenigstens eine Beschichtung als Emaillebeschichtung mit einem Glasfluss aus der Gruppe der Bismut-Zink-Silikat-Gruppe oder der Bismut-Silikat-Gruppe ausgestaltet sein. Die Bismut-Silikat-Gruppe der Glasflüsse kann dabei ebenfalls ZnO umfassen, aber lediglich als Nebenbestandteil, welcher, bezogen auf die Angabe der Komponenten in Gew.-% auf Oxidbasis, lediglich weniger als 2 Gew.-% beträgt.

Es wurde herausgefunden, dass auf diese Weise ein Gefüge der wenigstens einen Beschichtung erhalten wird, welches auf besonders einfache Weise in der Lage ist, zu einem vorteilhaften Reibkoeffizienten zu führen. Die Erfinder vermuten, dass dies daran liegt, dass solche Glasflüsse zu einer besonders guten Einbindung und Einregelung der Partikel der wenigstens einen Beschichtung führen. Vorteilhaft sind nämlich hier allgemein, ohne Beschränkung auf eine spezielle Ausführungsform des Glaselements, die temperaturstabilen Partikel des wenigstens einen Füllstoffs an der Grenzfläche der wenigstens einen Beschichtung angeordnet sind. Unter der Grenzfläche wird hierbei die Seite der wenigstens einen Beschichtung verstanden, welche von der Seitenfläche des Glassubstrats bzw. Glaselements, auf welcher die wenigstens eine Beschichtung angeordnet ist, abgewandt ist. Insbesondere kann diese Grenzfläche der wenigstens einen Beschichtung mit Luft gebildet sein, wenn auf der wenigstens einen Beschichtung keine weitere Beschichtung ausgebildet ist. Gleichzeitig stellt das Verhältnis der Komponenten des Glasflusses nach einer bevorzugten Ausführungsform sicher, dass eine ausreichende chemische Beständigkeit des Glasflusses und in entsprechender Weise der wenigstens einen Beschichtung gegeben. Dies kann insbesondere dadurch erzielt werden, dass der Glasfluss ein Verhältnis von Bi₂O₃/ZnO, bezogen auf den Gewichtsanteil des Glasflusses, von mehr als 1,3 aufweist, bevorzugt von wenigstens 1,5, insbesondere von wenigstens 5. Auf der anderen Seite sollte dieses Verhältnis auch nicht zu groß werden, um die vorteilhafte Ausbildung des Reibkoeffizienten der wenigstens einen Beschichtung nach der vorliegenden Offenbarung zu ermöglichen. Insbesondere kann daher allgemein vorgesehen sein, dass das Verhältnis von Bi₂O₃/ZnO weniger als 35, vorzugsweise weniger als 30, beträgt.

Vorteilhaft kann diese Ausführungsform des Glaselements, bei welcher die temperaturstabilen Partikel des wenigstens einen Füllstoffs der wenigstens einen Beschichtung an der Grenzfläche der wenigstens einen Beschichtung angeordnet sind, kombiniert werden mit solchen Ausführungsformen, bei welcher die wenigstens eine Beschichtung als Emaillebeschichtung umfassend einen Glasfluss ausgebildet ist, wobei der der Glasfluss bevorzugt Bi₂O₃ und ZnO umfasst, wobei besonders bevorzugt der Glasfluss ein Verhältnis von Bi₂O₃/ZnO, bezogen auf den Gewichtsanteil des Glasflusses, von mehr als 1,3 aufweist, bevorzugt von wenigstens 1,5, insbesondere von wenigstens 5, und vorzugsweise von höchstens 35, bevorzugt von höchstens 30, und/oder mit einer Ausführungsform, bei welcher der Glasfluss ein Verhältnis von der Summe von SiO₂ und Bi₂O₃ zu ZnO, (SiO₂+Bi₂O₃)/ZnO, von wenigstens 4,0 und vorzugsweise höchstens 45 aufweist.

Allgemein kann nach einer weiteren Ausführungsform vorgesehen sein, dass die wenigstens eine Beschichtung wenigstens ein Pigment umfasst, wobei das Pigment vorzugsweise nicht als Absorptionspigment ausgebildet ist, und wobei besonders bevorzugt das wenigstens eine Pigment ein Effektpigment ist oder umfasst. Gerade in der Kombination mit einem Effektpigment kann es zu einer sehr vorteilhaften Ausbildung des Gefüges der wenigstens einen Beschichtung kommen. Insbesondere kann dies dann der Fall sein, wenn die Beschichtung als eine Glasfluss-basierte Emaillebeschichtung ausgebildet ist, beispielsweise mit einem der vorstehend diskutierten Glasflüsse umfassend Bi₂O₃ und SiO₂ und ggf. ZnO, vorzugsweise so, dass die vorstehend genannten vorteilhaften Verhältnisse dieser Komponenten zueinander eingestellt werden.

Die Ursache für die Ausbildung dieses vorteilhaften Gefüges könnte darin liegen, dass mit den Glasflüssen, die so ausgebildet sind, dass sie Bi₂O₃ und ZnO umfassen, wobei bevorzugt der Glasfluss ein Verhältnis von Bi₂O₃/ZnO, bezogen auf den Gewichtsanteil des Glasflusses, von mehr als 1,3 aufweist, bevorzugt von wenigstens 1,5, insbesondere von wenigstens 5, und vorzugsweise weniger als 35, bevorzugt von weniger als 30,, und/oder mit einem Verhältnis von der Summe von SiO₂ und Bi₂O₃ zu ZnO, (SiO₂+Bi₂O₃)/ZnO, von wenigstens 4,0 und vorzugsweise höchstens 45, neben vorteilhaften Eigenschaften beispielsweise zur chemischen Beständigkeit auch sehr günstige Viskositätsverhältnisse beim Einbrand der wenigstens einen, als Emaillebeschichtung ausgebildeten Beschichtung erhalten werden können, sodass ein entsprechender Reibkoeffizient auf besonders einfache Art und Weise erhalten werden kann.

Mögliche Zusammensetzungen von Glasflüssen, mit denen das Glaselement nach Ausführungsformen mit der wenigstens einen Beschichtung auf besonders einfache Art und Weise erhalten werden kann, finden sich aufgelistet in der nachfolgenden Tabelle, wobei die Angaben sich auf Gew.-%, bezogen auf die Oxide der entsprechenden Komponenten, beziehen:

**Tabelle 1**

| Glasfluss Nr. | 1 | 2 | 3 |
|---|---|---|---|
| Glasflussart | Bismut-ZinkSilikat | Bismut-ZinkSilikat | Bismut-Silikat |
| Al₂O₃ | 0,19 | 0,9 | 0,31 |
| B₂O₃ | 4,9 | 14,38 | 3,23 |
| Bi₂O₃ | 51,95 | 20,11 | 35,28 |
| CaO | | 0,6 | |
| MgO | | 0,07 | |
| SrO | | 0,03 | 0,5 |
| La₂O₃ | | 0,08 | |
| Cr₂O₃ | | | 21,17 |
| CuO | | | 11,09 |
| Fe₂O₃ | | 0,03 | 0,3 |
| K₂O | 0,6 | 2,82 | 0,61 |
| Li₂O | 0,1 | 2,92 | 1,71 |
| WO₃ | | 0,09 | |
| Na₂O | 3,3 | 3,62 | 1,72 |
| P₂O₅ | | 0,8 | |
| SiO₂ | 26,98 | 36,19 | 19,15 |
| SO₃ | | 0,05 | |
| TiO₂ | 2,2 | 4,22 | 3,43 |
| ZnO | 9,59 | 12,06 | 1,31 |
| ZrO₂ | 0 | 0,12 | 0,21 |
| F | 0,2 | 0,2 | |
| SnO₂ | | 0,7 | |
| Summe | ~100 | ~100 | ~100 |
| Verhältnis | | | |
| Bi₂O₃ / ZnO | 5,42 | 1,67 | 26,93 |
| (SiO₂+Bi2O₃)/ZnO | 8,23 | 4,67 | 41,55 |

**Tabelle 2 (fortgesetzt)**

| Glasfluss Nr. | 4 | 5 | 6 |
|---|---|---|---|
| Glasflussart | Bismut-Silikat | Bismut-Silikat | |
| Al₂O₃ | 0,5 | 0,8 | 0,51 |
| B₂O₃ | 5,79 | 12,24 | 5,72 |
| Bi₂O₃ | 46,92 | 14,35 | 43,18 |
| CaO | 0,48 | 0,04 | 0,44 |
| MgO | | | |
| BaO | | 0,47 | |
| SrO | | | |
| La₂O₃ | | | |
| Cr₂O₃ | | | |
| CuO | | | |
| Fe₂O₃ | 0,05 | 0,02 | 0,04 |
| K₂O | 0,9 | 2,91 | 1,1 |
| Li₂O | 2,25 | 2,61 | 2,06 |
| WO₃ | | | |
| Na₂O | 2,5 | 5,12 | 3,01 |
| P₂O₅ | | 1 | 0,14 |
| SiO₂ | 32,94 | 46,15 | 35,15 |
| SO₃ | | 0,05 | |
| TiO₂ | 5,59 | 4,01 | 5,42 |
| ZnO | 2,1 | 10,23 | 3,21 |
| ZrO₂ | | | |
| F | | | |
| SnO₂ | | | |
| Summe | ~100 | ~100 | ~100 |
| Verhältnis | | | |
| Bi₂O₃ / ZnO | 22,34 | 1,4 | 13,45 |
| (SiO₂+Bi₂O₃) / ZnO | 38,03 | 5,91 | 24,40 |

**Tabelle 3 (fortgesetzt)**

| Glasfluss Nr. | 7 | 8 | 9 |
|---|---|---|---|
| Glasflussart | | | |
| Al₂O₃ | 0,57 | 0,8 | 0,8 |
| B₂O₃ | 6,18 | 13,6 | 13,44 |
| Bi₂O₃ | 42,85 | 16,1 | 15,85 |
| CaO | 0,43 | 0,05 | 0,03 |
| MgO | | | |
| BaO | | 0,48 | 0,39 |
| SrO | 0,02 | | 0,02 |
| La₂O₃ | | | |
| Cr₂O₃ | | | |
| CuO | | | |
| Fe₂O₃ | 0,03 | 0,03 | 0,03 |
| K₂O | 1,1 | 3 | 3,11 |
| Li₂O | 2,16 | 2,91 | 2,85 |
| WO₃ | | | |
| Na₂O | 3,09 | 4,3 | 4,41 |
| P₂O₅ | 0,13 | 1 | |
| SiO₂ | 34,88 | 42 | 42,12 |
| SO₃ | | | |
| TiO₂ | 5,38 | 4,2 | 4,21 |
| ZnO | 3,19 | 11,6 | 11,73 |
| ZrO₂ | | | |
| Nb₂O₅ | | | 1 |

| Glasflussart \| | | | |
|---|---|---|---|
| F | | | |
| SnO₂ | | | |
| Summe | ~100 | ~100 | ~100 |
| Verhältnis | | | |
| Bi₂O₃ / ZnO | 13,43 | 1,39 | 1,35 |
| (SiO₂+Bi₂O₃) / ZnO | 24,37 | 5,01 | 4,94 |

Die Summen wurden jeweils gerundet, sodass etwaige Abweichungen von der Summe von 100 % lediglich auf Rundungsfehler zurückzuführen sind.

Nach einer weiteren Ausführungsform des Glaselements ist die Schichtdicke der wenigstens einen Beschichtung größer oder gleich 3 µm und vorzugsweise kleiner als 10 µm, bevorzugt kleiner als 8 µm. Kleine Schichtdicken, insbesondere wenn es sich um die Dicke von Beschichtungen handelt, die glasbasiert ausgebildet sind, können vorteilhaft sein, weil auf diese Weise Beschichtungen resultieren, welche wenig anfällig gegen mechanische Belastungen sind, und gleichzeitig die Festigkeit des resultierenden Glaselements weniger beeinträchtigen als dickere Beschichtungen der gleichen Zusammensetzung. Die Schichtdicke wird im Rahmen der vorliegenden Offenbarung mittels Rasterelektronenmikroskopie bestimmt. Die Messung erfolgt dabei nach ASTM B748.1990-00. Dafür werden Querschnitte von polierten Proben angefertigt. Die rasterelektronenmikroskopischen Aufnahmen werden bei Beschleunigungsspannungen zwischen 10 kV und 20 kV und einer 2- bis 5-tausendfachen Vergrößerung erstellt. Vorliegend hat sich allerdings gezeigt, dass es für das Einstellen des Reibkoeffizienten in den vorgenannten Grenzen vorteilhaft ist, wenn die Schichtdicken nicht zu niedrig sind, insbesondere wenigstens 3 µm und vorzugsweise höchstens 10 µm betragen.

Allgemein kann vorgesehen sein, dass wenigstens eine Beschichtung auf der wenigstens einen Seitenfläche des Glaselements/-substrats vollflächig oder im Wesentlichen vollflächig aufgebracht ist. Eine im Wesentlichen vollflächige Beschichtung ist eine solche, die wenigstens 95 % der betreffenden Seitenfläche bedeckt. Ein vollflächiges Aufbringen der wenigstens einen Beschichtung ist aber nicht zwingend erforderlich. Es kann vorgesehen sein, die wenigstens eine Beschichtung lateral strukturiert in der Form aufzubringen, dass sie nur einen Teil der jeweiligen Seitenflächen von Glaselement/-substrat bedeckt. Beispielsweise kann die wenigstens Beschichtung in Form eines Musters aufgebracht werden, wie eines Rasters, beispielsweise eines Punktrasters, wie es beispielsweise von Sichtscheiben bekannt ist, in Form eines die um die Kante der jeweiligen Seitenfläche verlaufen Rahmens oder in Form eines Logos. Diese Ausführungen gelten in entsprechender Weise auch für den Fall, dass das Glaselement mehr als eine mittels Erwärmen aufgebrachte Beschichtung umfasst, beispielsweise eine weitere mittels Erwärmen aufgebrachte Beschichtung auf der gegenüberliegenden Seitenfläche des Glaselements/-substrats, auf welchem die wenigstens eine Beschichtung aufgebracht ist.

Beispielsweise kann also vorgesehen sein, dass das Glaselement auf beiden Seitenflächen jeweils wenigstens eine mittels Erwärmen aufgebrachte Beschichtung aufweist, wobei diese jeweils wenigstens einen Teil der entsprechenden Seitenfläche bedecken und auch ganzflächige aufgebracht sein können, aber nicht müssen. Die Beschichtungen können dabei auf der jeweiligen Seitenfläche unterschiedlich angeordnet sein; beispielsweise kann eine Beschichtung in Form eines Rahmens, die andere in Form eines Punktrasters aufgebracht sein; oder eine Beschichtung kann vollflächig, die andere aber lediglich partiell aufgebracht sein o.ä.

Es ist selbstverständlich auch möglich, dass weitere Beschichtungen aufgebracht sind, welche mittels eines anderen Beschichtungsverfahrens aufgebracht werden.

Nach einer weiteren Ausführungsform des Glaselements umfasst die wenigstens eine Beschichtung wenigstens 0,1 Gew.-% und vorzugsweise höchstens 35 Gew.-% Füllstoff, vorzugsweise höchstens 30 Gew.-% Füllstoff, bevorzugt 0,2 Gew.-% bis höchstens 20 Gew.-%, besonders bevorzugt 0,4 Gew.-% bis höchstens 10 Gew.-%, bezogen auf den Feststoffgehalt der wenigstens einen Beschichtung, wobei für den Fall, dass die Wenigstens eine Beschichtung mehr als einen Füllstoff umfasst, der Gesamtgehalt an Füllstoff betrachtet ist.

Ein Mindestgehalt an Füllstoff erscheint notwendig, um die haptischen Eigenschaften der wenigstens einen Beschichtung zu gewährleisten. Ein Mindestgehalt der wenigstens einen Beschichtung an dem wenigstens einen Füllstoff liegt vorteilhaft bei wenigstens 0,1 Gew.-%, bezogen auf den Feststoffgehalt der wenigstens einen Beschichtung, wobei für den Fall, dass die wenigstens eine Beschichtung mehr als einen Füllstoff umfasst, der Gesamtgehalt an Füllstoff betrachtet ist. Ein Gehalt von wenigstens 0,1 Gew.-% eines Füllstoffs ist hier vorteilhaft, um eine ausreichende haptische Wirkung der wenigstens einen Beschichtung zu erzielen. Vorteilhaft ist der Gehalt der wenigstens einen Beschichtung an Füllstoff höher und beträgt wenigstens 0,2 Gew.-%, bevorzugt wenigstens 0,4 Gew.-%. Für den Fall, dass die wenigstens eine Beschichtung auch Antihaft-Eigenschaften für den Fall, dass die wenigstens eine Beschichtung auf einer Unterlage aufliegt, aufweisen soll, kann es vorteilhafter sein, einen höheren Füllstoffgehalt zu wählen, beispielsweise von wenigstens 5 Gew.-%, wiederum bezogen auf den Feststoffgehalt der wenigstens einen Beschichtung.

Vorteilhaft sollte der Anteil des wenigstens einen Füllstoffs in der wenigstens einen Beschichtung allerdings nicht zu hoch sein. Ein zu hoher Anteil an Füllstoff kann die Eigenschaften der resultierenden wenigstens einen Beschichtung, die einen Füllstoff umfasst, nämlich negativ beeinflussen, beispielsweise deren Haftfestigkeit. Daher beträgt nach einer Ausführungsform der Gehalt der wenigstens einen Beschichtung an dem wenigstens einen Füllstoff höchstens 35 Gew.-%, bevorzugt höchstens 30 Gew.-%, besonders bevorzugt bei höchstens 20 Gew.-% und ganz besonders bevorzugt bei höchstens 10 Gew.-%.

Nach einer weiteren Ausführungsform des Glaselements weisen die temperaturstabilen Partikel eine durchschnittliche Partikelgröße, vorzugsweise angegeben als d₅₀, von höchstens 3 µm, bevorzugt von höchstens 1,2 µm, besonders bevorzugt höchstens 1,0 µm, auf, wobei eine bevorzugte Untergrenze der durchschnittlichen Partikelgröße, vorzugsweise angegeben als d₅₀, wenigstens 0,03 µm, vorzugsweise wenigstens 0,4 µm betragen kann.

Beispielsweise kann vorgesehen sein, dass die die wenigstens eine Beschichtung keine Füllstoffe, umfassend temperaturstabile Partikel, umfasst, welche eine durchschnittliche Partikelgröße, vorzugsweise angegeben oder bezogen auf den d₅₀-Wert des volumenäquivalenten Kugeldurchmessers, von mehr als 3,0 µm, bevorzugt von mehr als 1,2 µm, aufweisen. Insbesondere kann vorgesehen sein, dass die wenigstens eine Beschichtung im Rahmen üblicher Fertigungstoleranzen gar keine Füllstoffe umfassend Partikel mit einer Partikelgröße von mehr als 3,0 µm, bevorzugt mehr als 1,2 µm, umfasst. Darunter wird beispielsweise verstanden, dass der Füllstoffe Partikel mit einem d₉₉ von höchstens gleich oder kleiner 3,0 µm, bzw. mehr als 1,2 µm, aufweist, bezogen vorzugsweise auf den volumenäquivalenten Kugeldurchmesser der Partikel. Eine bevorzugte Untergrenze der Partikelgröße liegt hier, wie allgemein, bei 0,03 µm, bevorzugt bei 0,04 µm. Vorteilhaft umfasst der Füllstoffe keine Partikel mit einer Partikelgröße von mehr als 1,0 µm.

Unter einem temperaturstabilen Partikel bzw. einem Füllstoff umfassend temperaturstabile Partikel wird allgemein im Rahmen der vorliegenden Offenbarung verstanden, dass der Füllstoff Partikel umfasst, welche temperaturstabil ausgebildet sind und der Beschichtung, von welcher sie umfasst sind, eine bestimmte Oberflächenstruktur oder -textur verleihen, welche sich in einer Rauheit, wie sie beispielsweise nach Ausführungsformen mit den angegebenen Sₐ-Werten beschrieben werden können, niederschlagen können, und/oder darin, dass die Füllstoffpartikel sich auch an der Oberfläche der betreffenden Beschichtung, welche sie umfasst, anordnen.

Es hat sich gezeigt, dass eine besonders wenig gegen Abrieb- und/oder Kratzbelastungen anfällige Beschichtung resultiert, wenn die wenigstens eine Beschichtung lediglich sehr kleine Füllstoffpartikel umfasst, wie vorstehend beschrieben, also Partikel, welche einen d₅₀ oder sogar einen d₉₉ von höchstens 3,0 µm, bevorzugt höchstens 1,2 µm, besonders bevorzugt höchstens 1,0 µm, und vorzugsweise weniger aufweisen. Dennoch kann auf diese Weise noch ein entsprechender haptischer Effekt erzielt werden, welcher aber vorteilhaft mit einem geringen Reibkoeffizienten verbunden ist. Eine bevorzugte Untergrenze der Partikelgröße liegt hier, wie allgemein, bei wenigstens 0,03 µm, bevorzugt bei wenigstens 0,04 µm. Zwar ist es prinzipiell möglich, beispielsweise zur Erzielung einer besonders großen Rauigkeit der resultierenden Beschichtung, dass die Beschichtung auch andere und größere Partikel umfasst. Dies ist allerdings nicht zwingend erforderlich und es kann besonders bevorzugt sein, auch in fertigungstechnischer Hinsicht, eben kleinere und feinere Partikel zu verwenden, beispielsweise, um entsprechende feine Strukturen herzustellen, beispielsweise mittels Siebdruck. Gerade für den Druck von Logos und/oder in einem Displaybereich, in welchem man eine möglichst klare Durchsicht gewährleisten will, kann dies besonders vorteilhaft sein.

Nach einer weiteren Ausführungsform des Glaselements umfasst die wenigstens eine Beschichtung einen weiteren Füllstoff umfassend temperaturstabile Partikel, wobei die durchschnittliche Partikelgröße, vorzugsweise angegeben als d₅₀, des weiteren Füllstoffs, von der des wenigstens einen Füllstoffs verschieden ist und wobei vorzugsweise die durchschnittliche Partikelgröße, vorzugsweise angegeben als d₅₀, beider Füllstoffe höchstens 3,0 µm, bevorzugt höchstens 1,2 µm, besonders vorzugsweise höchstens 1,0 µm, beträgt, wobei eine bevorzugte Untergrenze der durchschnittlichen Partikelgröße, vorzugsweise angegeben als d₅₀, wenigstens 0,01 µm, vorzugsweise wenigstens 0,03 µm betragen kann, beispielsweise wenigstens 0,4 µm.

Mit anderen Worten umfasst nach einer Ausführungsform die wenigstens eine Beschichtung wenigstens zwei Füllstoffe mit unterschiedlicher durchschnittlicher Partikelgröße. Dies kann beispielsweise vorteilhaft sein, um zusätzlich zu den sonstigen Eigenschaften der wenigstens einen Beschichtung dieser noch einen besonders guten Antihaft-Effekt zu verleihen, oder für eine Anpassung des Reibkoeffizienten. Je nach genauer Anwendung des Glaselements kann vorgesehen sein, wie vorstehend spezifiziert, dass die durchschnittliche Partikelgröße, vorzugsweise bezogen auf den d₅₀ des volumenäquivalenten Partikeldurchmessers, beider Füllstoffe höchstens 3,0 µm, bevorzugt höchstens 1,2 µm, besonders bevorzugt höchstens 1,0 µm, beträgt. Dies ist aber nicht zwingend notwendig. Es kann beispielsweise für Anwendungen, in denen ein starker haptischer Effekt der wenigstens einen Beschichtung gewünscht ist, auch vorgesehen sein, dass ein Füllstoff bzw. die von ihnen jeweils umfassten Partikel eine Partikelgröße von mehr als 3,0 µm, bevorzugt höchstens 1,2 µm, besonders bevorzugt höchstens 1,0 µm aufweisen. Vorzugsweise sollte allerdings das bevorzugte, vorstehend genannte Verhältnis von höchstens 9, vorzugsweise höchstens 6, besonders bevorzugt höchstens 1,3, und wenigstens 0,01, der durchschnittlichen Partikelgröße zur Schichtdicke erfüllt ist.

Im Rahmen der vorliegenden Offenbarung wird, soweit dies nicht anders ausgeführt ist, hinsichtlich des Partikeldurchmesser bzw. synonym Partikelgrößen allgemein, ohne Beschränkung auf eine spezielle Ausführungsform, vorzugsweise der volumenäquivalente Kugeldurchmesser angegeben. Weiterhin wird hinsichtlich der durchschnittlichen Partikelgröße vorzugsweise allgemein, ohne Beschränkung auf eine spezielle Ausführungsform, auf den d₅₀-Wert der Partikelgrößenverteilung abgestellt. Sofern ausgeführt ist, dass eine Beschichtung und/oder ein Füllstoff keine Partikel oberhalb einer bestimmten Größe aufweist, wird darunter allgemein, ohne Beschränkung auf eine spezielle Ausführungsform, vorzugsweise verstanden, dass der d₉₉-Wert der Partikelgrößenverteilung (oder synonym Partikeldurchmesserverteilung) höchstens so groß ist wie der angegebene Wert.

Ausführungsformen mit mehr als zwei Füllstoffen sind ebenfalls möglich.

Nach einer weiteren Ausführungsform des Glaselements ist das scheibenförmige Glaselement thermisch vorgespannt bzw. liegt thermische vorgespannt vor. Insbesondere kann vorgesehen sein, dass das scheibenförmige Glaselement bzw. das scheibenförmige Glassubstrat aus Kalk-Natron-Glas ausgebildet ist und das Glaselement thermisch vorgespannt vorliegt. Die Dicke des scheibenförmigen Glassubstrats kann allgemein zwischen 1 mm und 10 mm liegen, vorzugsweise zwischen 2 mm und 6 mm, beispielsweise bei 2 mm, oder 3 mm, oder 4 mm. Die Dicke des scheibenförmigen Glassubstrats und des scheibenförmigen Glaselements entsprechen sich im Wesentlichen, da die Dicke des scheibenförmigen Substrats deutlich größer ist als die der Beschichtungen, sodass im Rahmen der Messgenauigkeit die Bestimmung der Dicke für das Substrat und das Element (also umfassend die wenigstens zwei Beschichtungen) denselben Wert liefert. Unter einem thermisch vorgespannten Glaselement wird verstanden, dass eine Vorspannung gemäß EN 12150 vorliegt.

Nach einer weiteren Ausführungsform des Glaselements ist der wenigstens eine Füllstoff aus SiO₂ ausgebildet oder umfasst SiO₂, wobei vorzugsweise alle der von der wenigstens einen Beschichtung umfassten Füllstoffe aus SiO₂ ausgebildet sind oder SiO₂ umfassen. Es ist allerdings auch möglich und kann vorteilhaft sein, wenn der Füllstoff aus Al₂O₃ und/oder ZrO₂ ausgebildet ist oder Al₂O₃ und/oder ZrO₂ umfasst, alternativ oder zusätzlich zu SiO₂.

Diese vorgenannten Materialien sind vorteilhaft, weil sie bei den Einbrandtemperaturen beispielsweise glasbasierter Beschichtungen temperaturbeständig sind und dabei chemisch inert. Al₂O₃ und ZrO₂ sind dazu bekannte Hartstoffe und können die Kratz- und Abriebfestigkeit von Beschichtungen, die sie umfassen, deutlich verbessern. SiO₂ wiederum hat den Vorteil, dass dieses Material in unterschiedlichen Modifikationen vorliegen kann und insbesondere auch in amorpher Form erhältlich ist. Auf diese Weise können beispielsweise Partikelformen erhalten werden, die je nach Anwendung maßgeschneidert sind. Insbesondere kann es möglich sein, im Wesentlichen kugelförmige Partikel zu erhalten, also Partikel, die als kugelförmig beschrieben werden können (im Rahmen üblicher Fertigungstoleranzen). Es ist sogar möglich, auf diese Weise monomodale und/oder bimodale Partikelgrößenverteilungen einzustellen. Außerdem ist SiO₂ allgemein so herstellbar, dass es in unterschiedlichen Korngrößen (oder synonym Partikelgrößen) erhältlich ist. Auch die Eigenschaften der Partikel aus oder umfassend SiO₂ können, beispielsweise für sogenannte Kieselsäuren, gezielt eingestellt werden, sodass solche Partikel gegebenenfalls auch zur Einstellung der Eigenschaften von flüssigen Beschichtungsmitteln, welche sie umfassen, beispielsweise von Pasten, eingesetzt werden können. Daher ist nach einer Ausführungsform der Einsatz von Füllstoffen aus oder umfassend SiO₂ besonders bevorzugt.

Nach einer weiteren Ausführungsform des Glaselements umfasst die wenigstens eine Beschichtung wenigstens ein Pigment, wobei das Pigment vorzugsweise nicht als Absorptionspigment ausgebildet ist, und wobei besonders bevorzugt das wenigstens eine Pigment ein Effektpigment ist oder umfasst.

Es wurde bereits ausgeführt, dass beispielsweise nach einer Ausführungsform des Glaselements die wenigstens eine Beschichtung kein Absorptionspigment umfasst, was insbesondere vorteilhaft sein kann für Anwendungen, in denen eine Durchsicht durch das Glaselement hindurch erwünscht ist auf hinter dem Glaselement angeordnete Gegenstände. Dies kann beispielsweise dann der Fall sein, wenn das Glaselement als Bedienblende ausgestaltet ist, aber auch allgemein für Anwendungen, in denen das Glaselement beispielsweise als Fenster oder Sichtscheibe dient.

Dies bedeutet aber nicht, dass die wenigstens eine Beschichtung zwingend kein Pigment umfasst. Vielmehr kann vorgesehen sein, dass die wenigstens eine Beschichtung ein solches umfasst, insbesondere ein Effektpigment.

Als Pigmente kommen allgemein in mittels Erwärmen aufgebrachten Beschichtungen vorzugsweise anorganische, nichtmetallische Pigmente in Betracht, insbesondere sogenannte keramische Pigmente, wie Metalloxide, beispielsweise Spinellpigmente. Beispielsweise können sogenannte Chrom-Kupfer-Spinelle zur Erzeugung eines schwarzen Farbeindrucks verwendet werden, TiO₂ und/oder ZrO₂ können als Weißpigmente eingesetzt werden. Dem Fachmann sind solche anorganischen, nichtmetallischen, vorzugsweise oxidischen Pigmente bekannt und er wird sie entsprechend zur Erzeugung des gewünschten Farbeindrucks einsetzen. Unter einem Absorptionspigment wird dabei ein Pigment im vorstehenden Sinne verstanden, welches durch Absorption im Festkörper eine Farbe aufweist, beispielsweise also blau, schwarz oder grün vorliegt. Weißpigmente liegen ungefärbt vor und verleihen einer Beschichtung durch Streuung eine weiße Farbe. Effektpigment sind solche, welche einer Beschichtung eine besonderen visuellen Effekt verleihen, beispielsweise ein Glitzern oder Schillern. Häufig umfassen solche Effektpigment plättchenförmige Partikel, welche auch zusätzlich noch eine Beschichtung oder ein Schichtsystem aufweisen können, beispielsweise, um die Reflexion des Partikels zu erhöhen. Bekannte Effektpigmente sind beispielsweise glimmerbasierte Effektpigmente, wie sie unter dem Handelsnamen bzw. der Marke "Iriodin" erhältlich sind. Das Effektpigment, welches die wenigstens eine Beschichtung vorzugsweise umfassen kann, ist vorzugsweise so ausgebildet, dass es Partikel umfasst, welche selbst ungefärbt vorliegen, also beispielsweise Partikel auf Glimmerbasis, auf Basis von Glasflakes und/oder SiO₂ und/oder Al₂O₃, sowie gegebenenfalls noch eine Beschichtung oder ein Schichtsystem auf den Partikeln. Vorzugsweise ist das Effektpigment nicht als metallisches Effektpigment ausgebildet, d.h. es handelt sich bei den Effektpigmentpartikeln nicht um Metallplättchen.

Solche metallischen Effektpigment sind zum einen gefährlich hinsichtlich der Brennbarkeit bei der Verarbeitung (metallische und damit prinzipiell brennbare Partikel), sondern würden die Beschichtung selbst auch opak machen, was für das Glaselement nach der vorliegenden Offenbarung nicht bevorzugt ist.

Eine Ausgestaltung eines Glaselements mit einer wenigstens einen Beschichtung nach einer Ausführungsform, welche noch ein Pigment, und zwar ein Effektpigment umfasst, beispielsweise als einziges Pigment, kann sehr vorteilhaft sein, gerade hinsichtlich der Einstellung des gewünschten Reibkoeffizienten und/oder der verbesserten mechanischen Beständigkeit der wenigstens einen Beschichtung. Hier kann es nämlich zum sehr vorteilhaften Zusammenwirken zwischen einem Effektpigment und dem Füllstoff bzw. den jeweils den Füllstoff und das Effektpigment bildenden Partikeln kommen, sodass eine besonders vorteilhafte Oberfläche der wenigstens einen Beschichtung resultiert, die sowohl haptisch wahrnehmbar als auch ausreichend glatt ist, also den entsprechenden Reibkoeffizienten auf besonders einfache Art und Weise ermöglicht. Die Erfinder vermuten, dass dies an einer Art Einregelung der Partikel des Effektpigments, beispielsweise durch die Füllstoffpartikel, kommen könnte. Zusätzlich verleiht ein entsprechendes Effektpigment der wenigstens einen Beschichtung noch eine ansprechende optische Anmutung. Ein solches Glaselement mit der wenigstens einen Beschichtung nach einer Ausführungsform, welche wenigstens ein Effektpigment umfasst, kann daher insbesondere für die Anwendung als Vorderseitenbeschichtung (bzw. Oberseitenbeschichtung) sinnvoll sein, also beispielsweise bei einer Verwendung des Glaselements als Bedienblende.

Nach einer weiteren Ausführungsform des Glaselements umfasst die wenigstens eine Beschichtung ein Bindemittel, bevorzugt ein glasbasiertes Bindemittel, besonders bevorzugt eine Glasfritte oder einen Glasfluss, wobei ganz besonders bevorzugt der Gehalt an Bindemittel, bezogen auf den Feststoffgehalt der wenigstens einen Beschichtung, wenigstens 35 Gew.-%, insbesondere wenigstens 40 Gew.-%, und vorzugsweise höchstens 95 Gew.-%, bevorzugt höchstens 92 Gew.-% beträgt. Auf diese Weise kann eine haftfeste Beschichtung erhalten werden, wobei dennoch die Gesamtfestigkeit des Glaselements gewährleistet sein kann. Deshalb sollte der Gehalt der wenigstens einen Beschichtung an Bindemittel auch nicht zu hoch sein.

Nach einer weiteren Ausführungsform des Glaselements umfasst dieses wenigstens zwei Beschichtungen (die wenigstens eine Beschichtung und eine weitere Beschichtung) auf unterschiedlichen Seitenflächen des Glassubstrats, welche mittels Erwärmen aufgebracht sind, in wenigstens jeweils einem Bereich der entsprechenden Seitenfläche und beide Beschichtungen umfassen vorzugsweise wenigstens einen Füllstoff umfassend temperaturstabile Partikel mit einer durchschnittlichen Partikelgröße, vorzugsweise angegeben als d₅₀, und haben eine Schichtdicke d, wobei das Verhältnis V von der durchschnittlichen Partikelgröße P zur Schichtdicke d, d₁, d₂ der Beschichtungen $V = \frac{P}{d}$ höchstens 9, vorzugsweise höchstens 6, besonders bevorzugt höchstens 1,3, und wenigstens 0,01 beträgt, wobei der wenigstens eine Füllstoff in der wenigstens einen Beschichtung und der wenigstens eine Füllstoff in der weiteren Beschichtung identisch sein können.

Nach einer weiteren Ausführungsform des Glaselements umfasst das Glaselement zwei Beschichtungen, nämlich die wenigstens eine Beschichtung und eine weitere Beschichtung, auf den unterschiedlichen Seitenflächen des Glassubstrats, welche mittels Erwärmen aufgebracht sind, und zwischen wenigstens einer der mittels Erwärmen aufgebrachten Beschichtung und einer der beiden Seitenflächen des schelbenförmigen Glassubstrats ist wenigstens eine weitere Beschichtung aufgebracht.

Nach einer weiteren Ausführungsform des Glaselements umfasst das Glaselement zwei Beschichtungen, nämlich die wenigstens eine Beschichtung und eine weitere Beschichtung, auf den unterschiedlichen Seitenflächen des Glassubstrats, welche mittels Erwärmen aufgebracht sind, und wenigstens eine dieser beiden Beschichtungen umfasst wenigstens ein Pigment.

Die Offenbarung betrifft auch ein Hausgerät, beispielsweise einen Backofen und/oder Kamin und/oder Herd, umfassend ein scheibenförmiges Glaselement nach Ausführungsformen, beispielsweise hergestellt oder herstellbar mit einer Paste nach Ausführungsformen und/oder in einem Verfahren nach einer Ausführungsform, wobei die Seitenfläche (101, 102) des Glassubstrats (10), auf welcher die wenigstens eine mittels Erwärmen aufgebrachte Beschichtung (21) aufgebracht ist, auf der Außenseite des Hausgeräts angeordnet ist..

Weiterhin betrifft die Offenbarung auch die Verwendung eines solches Glaselements, beispielsweise als Sichtscheibe und/oder Bedienblende, beispielsweise in einem Hausgerät, wie einem Backofen und/oder einem Kamin und/oder einem Herd, oder als Bestandteil in einem Sicherheitsglaslaminat und/oder als Kochfläche und/oder als Frontscheibe in einem Möbel und/oder einem elektrischen Gerät und/oder als Scheibenelement in der Innen- und/oder Außenarchitektur.

### Beispiele

Die Erfindung wird im Folgenden anhand von Beispielen näher erläutert.

### Beispiel 1

Ein allgemeiner Zusammensetzungsbereich einer Paste, mit welcher die wenigstens eine Beschichtung des Glaselements, welche wenigstens einen Füllstoff umfassend temperaturstabile Partikel mit einer durchschnittlichen Partikelgröße, vorzugsweise angegeben als d₅₀, umfasst und eine Schichtdicke hat, wobei das Verhältnis (V) von der durchschnittlichen Partikelgröße (P) zur Schichtdicke (d) der wenigstens einen Beschichtung, V=P/d, höchstens 9, vorzugsweise höchstens 6, besonders bevorzugt höchstens 1,3, und wenigstens 0,01 beträgt, ist im Folgenden aufgeführt. Die Angaben beziehen sich auf Gew.-%, bezogen auf das Gesamtgewicht der Paste.

**Tabelle 2**

| Komponente | Untergrenze | Obergrenze |
|---|---|---|
| Bindemittel (gesamt) | mehr als 15 | Weniger als 70 |
| Füllstoff (gesamt) | größer als 2, bevorzugt größer als 2,5 | weniger als 25 |
| Medium (gesamt) | Mehr als 25 | Weniger als 75 |
| Pigment (gesamt) | Sofern vorhanden, bevorzugt mindestens 0,1 | weniger als 25 |

Als Bindemittel kommt, wie ausgeführt, Insbesondere ein glasbasiertes Bindemittel in Betracht, vorzugsweise eine Glasfritte oder ein Glasfluss, welcher der Paste in Form eines Pulvers zugegeben werden kann. Es kann sich dabei auch um ein Gemisch unterschiedlicher zusammengesetzter Glaspulver handeln, welche sich beim Einbrennen zu einer glasigen Matrix verbinden. Die Angaben in der vorstehenden Tabelle beziehen sich dabei stets auf den Gesamtgehalt an der jeweiligen Komponente für den Fall, dass die Paste (und in entsprechender Weise die aus ihr resultierende Beschichtung) mehr als ein Bindemittel, mehr als einen Füllstoff etc. umfasst.

Als Pigmente, sofern vorhanden, kommen allgemein vorzugsweise anorganische, nichtmetallische Pigmente in Betracht. Es sind Ausführungen möglich, in denen das Pigment oder im Falle einer Pigmentmischung wenigstens ein Pigment als keramisches Pigment ausgebildet ist, beispielsweise als farbiges Metalloxid, wie ein Spinellpigment. In diesem Fall können sogenannte Chrom-Kupfer-Spinelle zur Erzeugung eines schwarzen Farbeindrucks verwendet werden, TiO₂ und/oder ZrO₂ können als Weißpigmente eingesetzt werden. Dem Fachmann sind solche anorganischen, nichtmetallischen, vorzugsweise oxidischen Pigmente bekannt und er wird sie entsprechend zur Erzeugung des gewünschten Farbeindrucks einsetzen.

Allerdings kann es wie ausgeführt vorteilhaft sein, wenn die wenigstens eine Beschichtung so ausgestaltet ist, dass sie kein Absorptionspigment umfasst, sondern, sofern ein Pigment vorhanden ist, dies als Effektpigment ausgebildet ist. Beispielsweise kann als Effektpigment ein glimmerbasiertes Effektpigment, wie sie beispielsweise unter dem Handelsnamen bzw. der Marke "Iriodin" bekannt sind, verwendet werden. Selbstverständlich ist auch eine Mischung aus einem oder mehreren keramischen Pigmenten mit einem oder mehreren Effektpigmenten möglich oder es kann eine Mischung aus mehreren Effektpigmenten eingesetzt werden.

Die Ausführungen, dass die wenigstens eine Beschichtung vorzugsweise kein Absorptionspigment umfasst, schließt im Übrigen nicht aus, dass weitere Beschichtung vom Glaselement umfasst sind, welche ein Absorptionspigment umfassen. Insbesondere kann allgemein für eine Ausführungsform des Glaselements, bei welchem auf den beiden unterschiedlichen Seitenflächen des Glaselements bzw. - Glassubstrates eine Beschichtung angeordnet ist, die weitere Beschichtung als pigmentierte, ein Absorptionspigment umfassende Beschichtung ausgebildet sein, unabhängig von der genauen Ausgestaltung der wenigstens einen Beschichtung.

Bevorzugte Füllstoffe umfassen allgemein keramische Füllstoffe, wobei hier Füllstoffe aus oder umfassend SiO₂ besonders vorteilhaft und entsprechend auch besonders bevorzugt sind. In der nachfolgenden Tabelle sind einige potentielle Füllstoffe, insbesondere aus oder umfassend SiO₂, aufgeführt.

**Tabelle 3**

| Nr. | Material | Bezeichnung | Hersteller | Partikelform | Größe [µm] |
|---|---|---|---|---|---|
| 1 | Pyrogene Kieselsäure | Aerosil (unterschiedliche) | Merck | kugelig | 0,04 |
| 2 | Polymethylsilsesquioxan | Tospearl 145A | Momentive Performance Materials GmbH | kugelig | 4,5 |
| 3 | Polymethylsilsesquioxan | E+508 | Coating Products | kugelig | 0,75 |
| 4 | Polymethylsilsesquioxan | E+540 | | | 3,87 |
| 5 | Polymethylsilsesquioxan | E+560 | | | 5,98 |
| 6 | Polymethylsilsesquioxan | ME 1,0 | Coating Products | kugelig | 1 |
| 7 | Borosilikatglas | W210 | 3 M | kugelig | \| 3 |
| 8 | Alkalialmuninosilikatglas | W 410 | 3M | kugelig | 4 |
| 9 | keramisch (SiO₂-Al₂O₃) | Zeeospheres ceramic | Zeeospheres ceramic, LLC | kugelig | 5 |
| 10 | α-Aluminiumoxid | Plain Al₂O₃, microspheres,C-ALU-35. | Microspheres-Nanospheres, Corpuscular Inc. | kugelig | 4 |
| 11 | Titanoxid | Plain TiO₂ microspheres, C-TIO-5 | Microspheres-Nanospheres, Corpuscular Inc. | kugelig | 5 |
| 12 | Borosilikatglas | Spheriglass Solid Glass Microspheres Grade 500 | Potters Industries LLC | kugelig | 5 |
| 13 | Kolloidale Kieselsäure (SiO₂) | Quartron SP-03F | Fuso Chemicals CO,. Ltd. | kugelig | 0,35 |
| 14 | Kolloidale Kieselsäure (SiO₂) | Quartron PL-20 | Fuso Chemicals CO,. Ltd. | kugelig | 0,22 |
| 15 | Polymethylsilsesquioxan | E+710 | Coating Products | kugelig | 8,4 |

Während einige der vorgenannten Füllstoffe zu große Partikel aufweisen, um als alleinige temperaturstabile Füllstoffpartikel von der wenigstens einen Beschichtung des Glaselements umfasst zu sein, können diese Füllstoffe dennoch von der Beschichtung nach Ausführungsformen umfasst sein, beispielsweise, um die Eigenschaften der Beschichtung und/oder des Glaselements positiv zu beeinflussen.

Wichtige Füllstoffe sind, alleine oder in Kombination, insbesondere Kieselsäurepartikel, sei es pyrogene Kieselsäure, wie sie beispielsweise unter der Bezeichnung "Aerosil" vertrieben werden, oder kolloidale Kieselsäuren, oder Partikel aus bzw. umfassend Polymethylsilsesquioxan. Die Erfinder gehen davon aus, dass auch Partikel aus oder umfassend beispielsweise Al₂O₃, ein Glas, TiO₂ und/oder ZrO₂ sowie ggf. und/oder SiO₂ als temperaturstabile Partikel mit einer kleinen Partikelgröße von höchstens 3,0 µm, bevorzugt höchstens 1,2 µm, besonders bevorzugt höchstens 1,0 µm, prinzipiell geeignet sind, um den Antihaft-Effekt der wenigstens einen Beschichtung des Glaselements nach der Offenbarung zu erzeugen, weniger also die genaue Zusammensetzung von Bedeutung ist als vielmehr die - geringe - Partikelgröße, wie sie weiter vorne auch ausführlich beschrieben ist.

Bindemittel können allgemein vorzugsweise SiO₂-basierte Bindemittel sein. Besonders bevorzugt sind Glasflüsse, wobei beispielsweise sogenannte Bismutborat- und/oder Zinkboratflüsse bevorzugt sind. Es können beispielsweise Bismutborat-Glasflüsse verwendet werden, oder Bismutzinksilikat-Glasflüsse, oder Zinksilikat-Glasflüsse. Besonders bevorzugt sind Glasflüsse, wie sie beispielsweise der vorstehenden Tabelle 1 entnommen werden können, und welche ein bestimmtes Verhältnis von Bi₂O₃ zu ZnO aufweisen und/oder ein bestimmtes Verhältnis von der Summe von SiO₂ und Bi₂O₃ zu ZnO, wie dies auch vorstehend allgemein erläutert ist.

In der nachfolgenden Tabelle sind Beispiele einer Paste zum Erzeugen eines Glaselements bzw. die wenigstens eine Beschichtung nach unterschiedlichen Ausführungsformen aufgeführt. Die Zusammensetzung der Beschichtung ergibt sich dabei aus den Festkörperkomponente, d.h. dem jeweiligen Glasfluss, dem oder den Füllstoff(en) und dem oder den Pigment(en). Alle Angaben zum Gehalt der jeweiligen Komponente erfolgen in Gew.-%, bezogen auf das Gewicht der Paste/des flüssigen Beschichtungsmittels. Die Beschichtungen wurden jeweils auf transparentes gefloatetes Kalknatronglas aufgebracht.

**Tabelle 4**

| Beispiel Nr. | 1 | 2 | 3 | 4 |
|---|---|---|---|---|
| Glasfluss (Tabelle 1) | 1 | 1 | 1 | 8 |
| Glasfluss Gehalt (Gew.-%) | 21,83 | 14,13 | 40,75 | 53,56 |
| Strukturbildende Partikel (Tabelle 3) | | | | |
| Tabelle 3, Nr. 3, Gehalt (Gew.-%) | | | 9,26 | |
| Tabelle 3, Nr. 3, Partikelgröße (µm) | | | 0,75 | |
| Tabelle 3, Nr. 2, Gehalt (Gew.-%) | | 19,2 | | |
| Tabelle 3, Nr. 2, Partikelgröße (µm) | | 4,50 | | |
| Tabelle 3, Nr. 1, Gehalt (Gew.-%) | | | | 0,50 |
| Tabelle 3, Nr. 1, Partikelgröße (µm) | | | | 0,04 |
| Tabelle 3, Nr. 15, Gehalt (Gew.-%) | | | | |
| Tabelle 3, Nr. 15, Partikelgröße (µm) | | | | |
| Tabelle 3, Nr. 5, Gehalt (Gew.-%) | | | | |
| Tabelle 3, Nr. 5, Partikelgröße (µm) | | | | |
| Tabelle 3, Nr. 6, Gehalt (Gew.-%) | 11,50 | | | |
| Tabelle 3, Nr. 6, Partikelgröße (µm) | 5,98 | | | |
| Pigmente | | | | |
| Schwarzpigment, Gew.-% | | | | |
| Effektpigment, Gew.-% | | | | |
| Medium/Lösungsmittel | 65,97 | 66,66 | 49,29 | 45,94 |
| Verdicker (PVP1300 000 (Polyvinylpyrrolidon)), Gew.-% | 0,7 | | 0,7 | |
| Schichtdicke (µm) | 5,76 | 4,08 | 3,66 | >3, <8 |

**Tabelle 5 (fortgesetzt)**

| Beispiel Nr. | 5 | 6 | 7 | 8 |
|---|---|---|---|---|
| Glasfluss (Tabelle 1) | 9 | 6 | 7 | 1 |
| Glasfluss Gehalt (Gew.-%) | 53,60 | 63,60 | 62,90 | 38,95 |
| Strukturbildende Partikel (Tabelle 3) | | | | |
| Tabelle 3, Nr. 3, Gehalt (Gew.-%) | | | | |
| Tabelle 3, Nr. 3, Partikelgröße (µm) | | | | |
| Tabelle 3, Nr. 2, Gehalt (Gew.-%) | | | | |
| Tabelle 3, Nr. 2, Partikelgröße (µm) | | | | |
| Tabelle 3, Nr. 1, Gehalt (Gew.-%) | 0,50 | 0,50 | 0,50 | 0,50 |
| Tabelle 3, Nr. 1, Partikelgröße (µm) | 0,04 | 0,04 | 0,04 | 0,04 |
| Tabelle 3, Nr. 15, Gehalt (Gew.-%) | | | | |
| Tabelle 3, Nr. 15, Partikelgröße (µm) | | | | |
| Tabelle 3, Nr. 5, Gehalt (Gew.-%) | | | | |
| Tabelle 3, Nr. 5, Partikelgröße (µm) | | | | |
| Tabelle 3, Nr. 6, Gehalt (Gew.-%) | | | | |
| Tabelle 3, Nr. 6, Partikelgröße (µm) | | | | |
| Pigmente | | | | |
| Schwarzpigment, Gew.-% | | | | 0,44 |
| Effektpigment, Gew.-% | 1 | | 1 | |
| Medium/Lösungsmittel | 44,90 | 35,90 | 35,60 | 58,60 |
| Verdicker (PVP1300 000 (Polyvinylpyrrolidon)), Gew.-% | | | | |
| Schichtdicke (µm) | >3, <8 | >3, <8 | >3, <8 | >3, <8 |

**Tabelle 6 (fortgesetzt)**

| Beispiel Nr. | 9 | 10 | 11 | 12 |
|---|---|---|---|---|
| Glasfluss (Tabelle 1) | 1 | 1 | 1 | 1 |
| Glasfluss Gehalt (Gew.-%) | 43,46 | 43,45 | 46,20 | 33,56 |
| Strukturbildende Partikel (Tabelle 3) | | | | |
| Tabelle 3, Nr. 3, Gehalt (Gew.-%) | 5,74 | 5,76 | 3,80 | 5,50 |
| Tabelle 3, Nr. 3, Partikelgröße (µm) | 0,75 | 0,75 | 0,75 | 0,75 |
| Tabelle 3, Nr. 2, Gehalt (Gew.-%) | 1,50 | | | |
| Tabelle 3, Nr. 2, Partikelgröße (µm) | 3,87 | | | |
| Tabelle 3, Nr. 1, Gehalt (Gew.-%) | | | | 2,50 |
| Tabelle 3, Nr. 1, Partikelgröße (µm) | | | | 0,04 |
| Tabelle 3, Nr. 15, Gehalt (Gew.-%) | | 1,5 | 0,7 | |
| Tabelle 3, Nr. 15, Partikelgröße (µm) | | 8,4 | 8,4 | |
| Tabelle 3, Nr. 5, Gehalt (Gew.-%) | | | | |
| Tabelle 3, Nr. 5, Partikelgröße (µm) | | | | |
| Tabelle 3, Nr. 6, Gehalt (Gew.-%) | | | | |
| Tabelle 3, Nr. 6, Partikelgröße (µm) | | | | |
| Pigmente | | | | |
| Schwarzpigment, Gew.-% | | | | 0,7 |
| Effektpigment, Gew.-% | | | | |
| Medium/Lösungsmittel | 49,30 | 49,29 | 49,30 | 57,74 |
| Verdicker (PVP1300 000 (Polyvinylpyrrolidon)), Gew.-% | | | | |
| Schichtdicke (µm) | 3,23 | 3,20 | | 5,70 |

**Tabelle 7 (fortgesetzt)**

| Beispiel Nr. | 13 | 14 | 15 | 16 |
|---|---|---|---|---|
| Glasfluss (Tabelle 1) | 1 | 1 | 1 | 1 |
| Glasfluss Gehalt (Gew.-%) | 40,73 | 40,84 | 39,42 | 39,42 |
| Strukturbildende Partikel (Tabelle 3) | | | | |
| Tabelle 3, Nr. 3, Gehalt (Gew.-%) | 5,70 | 5,22 | 2,50 | |
| Tabelle 3, Nr. 3, Partikelgröße (µm) | 0,75 | 1,00 | 0,75 | |
| Tabelle 3, Nr. 2, Gehalt (Gew.-%) | | 0,99 | 0,30 | |
| Tabelle 3, Nr. 2, Partikelgröße (µm) | | 4,50 | 4,50 | |
| Tabelle 3, Nr. 1, Gehalt (Gew.-%) | 2,50 | 2,50 | 2,50 | 11,30 |
| Tabelle 3, Nr. 1, Partikelgröße (µm) | 0,04 | 0,04 | 0,04 | 0,04 |
| Tabelle 3, Nr. 15, Gehalt (Gew.-%) | | | | |
| Tabelle 3, Nr. 15, Partikelgröße (µm) | | | | |
| Tabelle 3, Nr. 5, Gehalt (Gew.-%) | | | | |
| Tabelle 3, Nr. 5, Partikelgröße (µm) | | | | |
| Tabelle 3, Nr. 6, Gehalt (Gew.-%) | | | | |
| Tabelle 3, Nr. 6, Partikelgröße (µm) | | | | |
| Pigmente | | | | |
| Schwarzpigment, Gew.-% | 1,17 | 1,17 | 6,0 | |
| Effektpigment, Gew.-% | | | | |
| Medium/Lösungsmittel | 49,90 | 19,28 | 49,28 | 49,28 |
| Verdicker (PVP1300 000 (Polyvinylpyrrolidon)), Gew.-% | | | | |
| Schichtdicke (µm) | 3,20 | 4,00 | 4,00 | >3,7 |

**Tabelle 8 (fortgesetzt)**

| Beispiel Nr. | 17 | 18 |
|---|---|---|
| Glasfluss (Tabelle 1) | 2 | 3 |
| Glasfluss Gehalt (Gew.-%) | 40,42 | 55,09 |
| Strukturbildende Partikel (Tabelle 3) | | |
| Tabelle 3, Nr. 3, Gehalt (Gew.-%) | | |
| Tabelle 3, Nr. 3, Partikelgröße (µm) | | |
| Tabelle 3, Nr. 2, Gehalt (Gew.-%) | | |
| Tabelle 3, Nr. 2, Partikelgröße (µm) | | |
| Tabelle 3, Nr. 1, Gehalt (Gew.-%) | 12,30 | 0,53 |
| Tabelle 3, Nr. 1, Partikelgröße (µm) | 0,04 | 0,04 |
| Tabelle 3, Nr. 15, Gehalt (Gew.-%) | | |
| Tabelle 3, Nr. 15, Partikelgröße (µm) | | |
| Tabelle 3, Nr. 5, Gehalt (Gew.-%) | | |
| Tabelle 3, Nr. 5, Partikelgröße (µm) | | |
| Tabelle 3, Nr. 6, Gehalt (Gew.-%) | | |
| Tabelle 3, Nr. 6, Partikelgröße (µm) | | |
| Pigmente | | |
| Schwarzpigment, Gew.-% | | 17,89 |
| Effektpigment, Gew.-% | | |
| Medium/Lösungsmittel | 50,28 | 26,49 |
| Verdicker (PVP1300 000 (Polyvinylpyrrolidon)), Gew.-% | | |
| Schichtdicke (µm) | >3,8 | 3,00 |

### Beschreibung der Zeichnungen

Die Erfindung wird im Folgenden anhand von Figuren weiter erläutert. Es zeigen
- Fig. 1 bis 3: schematische und nicht maßstabsgetreue Darstellungen von Ansichten des Glaselements nach Ausführungsformen, sowie
- Fig. 4 und 5: Darstellungen von Messaufbauten.

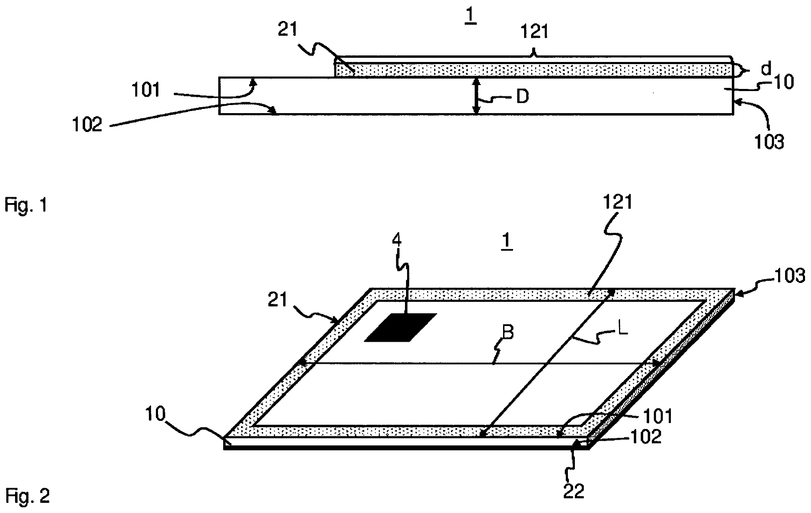

Fig. 1 zeigt in schematischer und nicht maßstabsgetreuer Darstellung eine Schnittansicht durch ein Glaselement 1 nach einer Ausführungsform. Das Glaselement 1 ist scheibenförmig ausgebildet, was bedeutet, dass seine Dicke D wenigstens eine größer ist als seine Länge L und Breite B, wie sie auch in Fig. 2 entsprechend in der schematischen und nicht maßstabsgetreuen perspektivischen Ansicht eines Glaselements 1 nach einer Ausführungsform bezeichnet sind. Durch Länge L und Breite B des Glaselements 1 - bzw. in entsprechender Weise des Glassubstrats 10 - ergeben sich die Seitenflächen 101, 102 des Glaselements 1 bzw. in entsprechender Weise des Glassubstrats 10, wie dies auch weiter oben bereits erläutert wurde. Die beiden Seitenflächen 101, 102 des Glaselements 1 bzw. des Glassubstrats 10 liegen einander gegenüber und sind vorzugsweise im Rahmen üblicher Fehlertoleranzen und/oder Fertigungstoleranzen parallel zueinander. Verbunden werden sie durch die umlaufende Kantenfläche 103.

Das scheibenförmige Glaselement 1 umfasst also ein scheibenförmiges Glassubstrat 10, mit den zwei Seitenflächen 101, 102 und der umlaufenden Kantenfläche 103. Vorzugsweise ist das Glassubstrat 10 aus Kalk-Natron-Glas ausgebildet oder umfasst ein solches. Das Glaselement 1 weist wenigstens eine mittels Erwärmen aufgebrachte Beschichtungen 21 auf, bei der es sich um eine glasbasierte Beschichtung, vorzugsweise um eine Emaille-Beschichtung oder kurz Emaille, handeln kann. Diese wenigstens eine Beschichtung 21 ist auf einer Seitenfläche oder Seite des Glaselements 1 bzw. in entsprechender Weise des Glassubstrats 10 in mindestens einem Bereich angeordnet, hier der Seitenfläche 101 im Bereich 121. Sie hat die Schichtdicke d und umfasst wenigstens einen Füllstoff umfassend temperaturstabile Partikel, welche hier durch die "Pünktchen", welche innerhalb der Beschichtung 21 angeordnet sind, angedeutet sind, aufgrund von deren geringer Größe, gerade auch in Bezug auf die Schichtdicke d der Beschichtung 21, hier nicht bezeichnet wurden. Denn die temperaturstabilen Partikel des Füllstoffs weisen eine durchschnittliche Partikelgröße, die vorzugsweise als d₅₀, bezogen auf den volumenäquivalenten Kugeldurchmesser der Partikel, angegeben ist, und wobei vorzugsweise das Verhältnis V von der durchschnittlichen Partikelgröße P zur Schichtdicke d der wenigstens einen Beschichtung 21 $V = \frac{P}{d}$ höchstens 9, vorzugsweise höchstens 6, besonders bevorzugt höchstens 1,3, und wenigstens 0,01 beträgt. Eine bevorzugte Untergrenze der Partikelgröße liegt hier, wie allgemein, bei wenigstens 0,03 µm, bevorzugt bei wenigstens 0,04 µm. Mit anderen Worten und wie hier schematisch aufgezeigt können die temperaturstabilen Partikel, die vom Füllstoff umfasst sind, also lediglich eine durchschnittliche Partikelgröße aufweisen, die lediglich ein Bruchteil der Schichtdicke beträgt, und höchstens so groß sein wie die Schichtdicke selbst, wobei kleiner ausgebildete Füllstoffpartikel und entsprechend ausgebildete Füllstoffe, die lediglich kleine Partikel umfasst, bevorzugt sein können. Der Reibkoeffizient des Glaselements 1 in dem Bereich 121, in dem die wenigstens eine Beschichtung 21 angeordnet ist, beträgt höchstens 0,7, bevorzugt höchstens 0,6, besonders bevorzugt weniger als 0,6, ganz besonders bevorzugt höchstens 0,5, und vorzugsweise wenigstens 0,07, bevorzugt wenigstens 0,1, besonders bevorzugt wenigstens 0,2.

Auf diese Weise sind kleine Schichtdicke d möglich, welche nach einer Ausführungsform im einstelligen Mikrometerbereich liegen. Vorzugsweise ist die Schichtdicke größer oder gleich 3 µm und bevorzugt kleiner als 10 µm, besonders bevorzugt kleiner als 8 µm, sind.

Bei Ausführungsformen, bei welchen das scheibenförmige Glassubstrat so ausgebildet ist, dass die wenigstens eine mittels Erwärmen aufgebrachte Beschichtung, vorzugsweise eine Emaille-Beschichtung, die auf wenigstens einer Seitenfläche des scheibenförmigen Glassubstrats in mindestens einem Bereich angeordnet ist, transparent ausgebildet ist, d.h. beispielsweise kein Absorptionspigment umfasst. In diesem Fall ist die Dicke der wenigstens einen Beschichtung vorzugsweise kleiner als 8 µm.

Bei Ausführungsformen mit der wenigstens einen Beschichtung, die als opake Beschichtung ausgebildet ist, worunter insbesondere verstanden werden kann, dass die wenigstens eine Beschichtung wenigstens ein Absorptionspigment umfasst, ist die Dicke der wenigstens einen Beschichtung vorzugsweise größer als 3 µm und kleiner als 15 µm. Dies kann insbesondere dann bevorzugt sein, wenn die wenigstens eine Beschichtung auch einen visuell wahrnehmbaren Farbeindruck aufweisen soll, beispielsweise einen schwarzen Farbeindruck.

Nach einer Ausführungsform weist das Glaselement 1 eine Trübung auf dem Messgerät HAZE-GUARD plus der Firma BYK-Gardener, zwischen größer als 15 und weniger als 95, vorzugsweise größer als 15 und weniger als 60, aufweist, und/oder eine Klarheit (clarity), bestimmt mit dem Messgerät HAZE-GUARD plus der Firma BYK-Gardener, von wenigstens 6 und höchstens 50, vorzugsweise von wenigstens 15 und höchstens 35, auf.

Nach einer weiteren Ausführungsform des scheibenförmigen Glaselements 1 umfasst die wenigstens eine Beschichtung 21 kein Absorptionspigment und/oder das Glaselement weist eine Transmission von mehr als 60%, bevorzugt mehr als 75%, und weniger als 95 %, bevorzugt weniger als 92 %, besonders bevorzugt weniger als 90% auf, bestimmt in einem Bereich des Glaselements 1, in welchem nur das Glassubstrat 10 und die wenigstens eine Beschichtung 21 angeordnet sind.

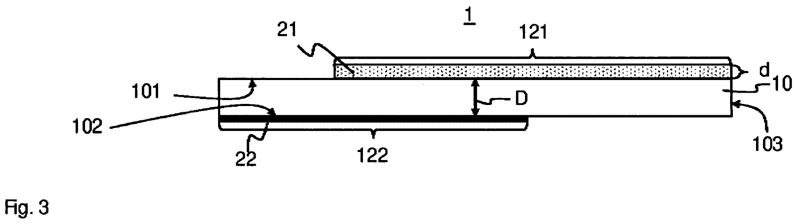

Die Gesamttransmission des Glaselements 1 kann daher in einem sehr weiten Bereich variieren. Dies wird nachfolgend unter Bezug auf Fig. 3 genauer erläutert. Beispielsweise kann die wenigstens eine Beschichtung 21 so ausgebildet sein, dass sie eine hohe Transparenz aufweist. Dies kann beispielsweise allgemein, ohne Beschränkung auf eine spezielle Ausführungsform, insbesondere für solche Beschichtungen 21 der Fall sein, die neben dem Bindemittel, vorzugsweise einem Glasfluss bzw. einer Glasfritte, nur den wenigstens einen Füllstoff umfassend temperaturstabile Partikel umfasst, oder ggf. noch ein Effektpigment, welches seinerseits keinerlei absorbierenden Substanzen umfasst und/oder allgemein kein Absorptionspigment umfasst. Die Ausbildung der wenigstens einen Beschichtung 21 ist allerdings nur bedingt ein Maß für den Transmissionsgrad des Glaselements 1, da dieser vom Messort abhängt: Ist das Glaselement 1 beispielsweise so ausgebildet wie in Fig. 3, weist also eine weitere Beschichtung 22 auf der Seitenfläche 102 auf, welche in dem Bereich 122 der Seitenfläche 102 angeordnet ist, und ist diese weitere Beschichtung 22 beispielhaft so ausgebildet, dass sie (wie hier durch die schwarze Farbe der weiteren Beschichtung 22 angedeutet) opak ist, so kann der Transmissionsgrad des Glaselements 1 sehr gering sein, wird er dort bestimmt, wo sich die Bereiche 121 und 122 überlappen. Gleichzeitig kann er sehr hoch sein, wird er dort bestimmt, wo lediglich die Beschichtung 21 auf dem Glassubstrat 10 bzw. der Seitenfläche 101 angeordnet ist. Das in Fig. 3 dargestellte Glaselement 1 ist damit eine besondere Ausführungsform des Glaselements 1, aufweisend eine weitere Beschichtung 22, welche insbesondere eine mittels Erwärmen aufgebrachte weitere Beschichtung sein kann, und die vorzugsweise als Emaille-Beschichtung ausgebildet ist, wobei die wenigstens eine Beschichtung 21 und die weitere Beschichtung 22 auf unterschiedlichen Seitenflächen 101 und 102 des Glassubstrats 10 bzw. Glaselements 1 angeordnet sind. Die Beschichtungen 21, 22 sind dabei jeweils nur bereichsweise, also in den Bereichen 121, 122 angeordnet und überlappen sich teilweise. Allerdings ist dies nicht zwingend erforderlich. Es kann allgemein vorgesehen sein, dass beide Beschichtungen 21, 22 nach dieser Ausführungsform vollflächig oder nur bereichsweise oder eine vollflächig, die andere aber nur bereichsweise auf die jeweils entsprechende Seitenfläche 101, 102 aufgebracht sind. Die beiden Beschichtungen 21, 22 können dabei unterschiedlich ausgestaltet sein, es kann aber auch vorgesehen sein, dass auch die weitere Beschichtung 22 entsprechend der Beschichtung 21 ausgestaltet ist, also ebenfalls wenigstens einen Füllstoff umfassend temperaturstabile Partikel umfasst, wobei auch das Verhältnis zwischen der durchschnittlichen Partikelgröße P und der Schichtdicke d entsprechend $V = \frac{P}{d}$ von vorzugsweise höchstens 9, vorzugsweise höchstens 6, besonders bevorzugt höchstens 1,3, und wenigstens 0,01, und mit dem entsprechenden niedrigen Reibkoeffizienten von höchstens 0,7, bevorzugt höchstens 0,6, besonders bevorzugt weniger als 0,6, ganz besonders bevorzugt höchstens 0,5, und vorzugsweise wenigstens 0,07, bevorzugt wenigstens 0,1, besonders bevorzugt wenigstens 0,2.

Geeignete Gehalte der wenigstens einen Beschichtung 21 an Füllstoff betragen zwischen wenigstens 0,1 Gew.-% und vorzugsweise höchstens 35 Gew.-% Füllstoff, vorzugsweise höchstens 30 Gew.-% Füllstoff, und bevorzugt 0,2 Gew.-% bis höchstens 20 Gew.-%, besonders bevorzugt 0,4 Gew.-% bis höchstens 10 Gew.-%, bezogen auf den Feststoffgehalt der wenigstens einen Beschichtung 21, wobei für den Fall, dass die wenigstens eine Beschichtung 21 mehr als einen Füllstoff umfasst, der Gesamtgehalt an Füllstoff betrachtet ist. Höhere Gehalte an Füllstoff können dabei zu schlecht haftenden Beschichtungen führen. Zu geringe Füllstoffgehalte können allerdings dazu führen, dass die Vorteile der wenigstens einen Beschichtung 21, nicht mehr gewährleistet wäre. Zu hohe Füllstoffgehalte können weiterhin auch, da die Partikel des Füllstoffs ja wie ausgeführt recht klein sind, einen stark eindickenden Effekt auf das zumeist flüssige Beschichtungsmittel, beispielsweise eine Paste, wie eine Siebdruckpaste, haben, sodass sich diese nicht oder nur schlecht auftragen ließe oder auch die Topfzeit des flüssigen Beschichtungsmittels, beispielsweise der Paste, negativ beeinflusst, nämlich vermindert, werden könnte.

Die temperaturstabilen Partikel weisen nach einer Ausführungsform eine durchschnittliche Partikelgröße, vorzugsweise angegeben als d₅₀, von höchstens 3,0 µm, bevorzugt höchstens 1,2 µm, besonders bevorzugt höchstens 1,0 µm, auf, wobei die durchschnittliche Partikelgröße vorzugsweise allgemein, ohne Beschränkung auf eine spezielle Ausführungsform des Glaselements 1, auf den volumenäquivalenten Kugeldurchmesser der Partikel bezogen ist. Eine bevorzugte Untergrenze der Partikelgröße liegt hier, wie allgemein, bei wenigstens 0,03 µm, bevorzugt bei wenigstens 0,04 µm.

Es kann allgemein vorgesehen sein, dass die wenigstens eine Beschichtung 21 neben dem wenigstens einen Füllstoff noch einen weiteren Füllstoff, vorzugsweise mit temperaturstabilen Partikeln umfasst, also mit solchen Partikeln, welche ebenfalls eine durchschnittliche Partikelgröße, vorzugsweise angeben als d₅₀ der Korngrößenverteilung, und bevorzugt allgemein bezogen auf den volumenäquivalenten Kugeldurchmesser, aufweisen, wobei vorzugsweise das Verhältnis von der durchschnittlichen Partikelgröße zur Schichtdicke d der wenigstens einen Beschichtung 21 höchstens 9, vorzugsweise höchstens 6, besonders bevorzugt höchstens 1,3, und wenigstens 0,01 beträgt, und mit dem Reibkoeffizienten von höchstens 0,7, bevorzugt höchstens 0,6, besonders bevorzugt weniger als 0,6, ganz besonders bevorzugt höchstens 0,5, und vorzugsweise wenigstens 0,07, bevorzugt wenigstens 0,1, besonders bevorzugt wenigstens 0,2. Der weitere Füllstoff weist dabei Partikel auf, welche bei denen die durchschnittliche Partikelgröße, vorzugsweise angegeben als d₅₀, des weiteren Füllstoffs, von der des wenigstens einen Füllstoffs verschieden ist und wobei vorzugsweise die durchschnittliche Partikelgröße, vorzugsweise angegeben als d₅₀, beider Füllstoffe höchstens 3,0 µm, bevorzugt höchstens 1,2 µm, besonders bevorzugt höchstens 1,0 µm, beträgt. Allgemein ist es aber auch möglich, dass die Partikel des weiteren Füllstoffs größer sind als die der im Rahmen der Offenbarung als temperaturstabile Partikel bezeichneten Partikel.

Wie man insbesondere der Darstellung von Fig. 2 entnehmen kann, kann vorgesehen sein, dass die Beschichtung 21 lediglich auf einen Teil der Seitenfläche 101 des Glassubstrats 10 und entsprechend des Glaselements 1 aufgebracht ist, nämlich im Bereich 121, was im Rahmen der vorliegenden Offenbarung als lateral strukturiert aufgebracht bezeichnet werden kann. Es kann auch vorgesehen sein, dass auf einer Seitenflächen 101, 102 eine oder mehrere weitere Schichten 4 aufgebracht sind, welche beispielsweise auch mit der Beschichtung 21 und/oder einer eventuell auf der der Beschichtung 21 gegenüberliegenden Seitenfläche angeordneten Beschichtung 22 partiell überlappen können. Die weitere Schicht 4 kann beliebig hergestellt sein, beispielsweise mittels eines Druckverfahrens aufgebracht, und es muss sich dabei ebenfalls nicht um eine mittels Erwärmen aufgebrachte Schicht handeln. Allgemein kann vorgesehen sein, dass die Beschichtung 21 vollflächig oder im Wesentlichen vollflächig, also zu mindestens 95 %, die Seitenfläche 101 bedeckt, oder nur partiell aufgebracht ist, beispielsweise in Form eines Rahmens, wie dies in Fig. 2 dargestellt ist. Die Beschichtung 21 kann alternativ oder zusätzlich auch in Form eines Rasters, beispielsweise eines Punktrasters, auf die Seitenfläche 101 aufgebracht sein. Entsprechendes gilt für die weitere Beschichtung 22, sofern das Glaselement 1 eine solche Beschichtung umfasst. Die Beschichtung 22 kann dabei eine weitere, mittels Erwärmen aufgebrachte Beschichtung, welche auf der gegenüberliegenden Seitenfläche des Glaselements 1 aufgebracht ist, auf das die wenigstens eine Beschichtung 21 angeordnet ist, sein, oder mittels eines anderen Beschichtungsverfahrens aufgebracht sein. Die der wenigstens einen Beschichtung 21, welche temperaturstabile Partikel eines Füllstoffs umfasst, wie dies auch vorstehend im Detail bereits erläutert wurde, gegenüberliegende Beschichtung 22 kann, sofern vorhanden, allerdings ebenfalls mittels Erwärmen aufgebracht sein und kann auch, ebenfalls einen Füllstoff entsprechend der wenigstens einen Beschichtung 21 umfassen. Sie kann im Wesentlichen identisch zur Beschichtung 21 aufgebaut sein oder auch hinsichtlich ihrer Zusammensetzung deutlich abweichen, beispielsweise Pigment umfassen, während die Beschichtung 21 pigmentfrei ausgebildet ist, oder auch füllstofffrei ausgebildet sein. Die genaue Ausgestaltung der Beschichtung 22 im Vergleich zur Beschichtung 21 hängt dabei vom Einsatz des Glaselements 1 ab und kann im Wesentlichen recht flexibel gewählt werden.

Vorzugsweise umfasst die wenigstens eine Beschichtung 21 keine Füllstoffe umfassend temperaturstabile Partikel, welche eine durchschnittliche Partikelgröße, vorzugsweise angegeben als d₅₀, von mehr als 3,0 µm, bevorzugt mehr als 1,2 µm, vorzugsweise von mehr als 1,0 µm, aufweisen.

Vorteilhaft kann allgemein vorgesehen sein, dass das Glaselement 1 thermisch vorgespannt vorliegt, insbesondere, wenn das Glassubstrat 10 aus Kalk-Natron-Glas ausgebildet ist oder ein solches umfasst. Insbesondere kann vorgesehen sein, dass eine Beschichtung oder auch beide Beschichtungen 21, 22 während des thermischen Vorspannprozesses eingebrannt werden können.

Allgemein sind, ohne Beschränkung auf Ausführungsformen, Rauheiten Sₐ der wenigstens einen Beschichtung 21 von wenigstens 0,1 µm und höchstens 2,0 µm möglich.

Fig. 4 zeigt eine photographische Darstellung eines Tribometers zur Bestimmung des Reibkoeffizienten. Das gezeigte Tribometer ist geeignet für ein sogenanntes "Pin-on-disc"-Verfahren, wie es beispielsweise in DIN 50324-07 bzw. ISO 18535beschrieben ist. Bezeichnet sind die Probe, hier allgemein eine Platte mit einer Beschichtung, welche mit dem Reibpartner, hier also der Korund Kugel (auch als "sapphire ball" bezeichnet) in Kontakt steht, die Richtung, in der die Reibkraft wirkt, und die auf die Probe und die Korund Kugel wirkende Normalkraft.

Fig. 5 zeigt einen schematischen Aufbau eines Messgeräts, wie dem Messgerät HAZE GUARD plus der Firma BYK-Gardener, mit welchem Trübung/Haze, Klarheit/clarity und Transmission bestimmt werden können. Haze/Trübung werden bestimmt nach ASTM D1003. Im Rahmen der vorliegenden Anmeldung wird der Begriff der Transmission (synonym Gesamttransmission bzw. Totaltransmission) für die Bezeichnung des Lichttransmissionsgrads τ_{γ} gemäß der Definition In DIN EN 410 verwendet. Er basiert auf dem spektralen Lichttransmissionsgrad τ(λ), der mit der Augenempfindlichkeit V(λ) und einer Standardlichtquelle (D65) gewichtet ist. Die Standardlichtquelle D65 ist ebenfalls in der DIN EN 410 beschrieben und entspricht in etwa der Sonnenstrahlung.

In der Beleuchtungseinrichtung 50 wird der Lichtstrahl 51 erzeugt, welcher auf das Glaselement 1 nach einer Ausführungsform trifft. Die auf wenigstens einer Seitenfläche des Glaselements 1 wenigstens in einem Bereich angeordnete wenigstens eine Beschichtung ist hier der besseren Übersichtlichkeit halber nicht dargestellt. Der Lichtstrahl 51 trifft auf das Glaselement 1 und tritt in die Kugel 52 ein, die als Integrationskugel so ausgestaltet ist, dass auf die Innenwand der Kugel 52 auftreffendes Licht durch eine auf der Innenwand angeordnete matte weiße Beschichtung gleichmäßig verteilt und mittels eines Detektors 53 detektiert werden. Die Transmission (Totaltransmission, τ_{γ} gemäß der Definition in DIN EN 410) wird bestimmt bei geschlossenem Ausgang 54, die Trübung hingegen bei geöffnetem Ausgang 54, wobei hier das austretende Licht mittels des Ringsensors 55 detektiert wird. Dieser ist im rechten Bereich der Fig. 5 auch in Aufsicht dargestellt. Der Messvorgang kann je nach verwendetem Messgerät weitestgehend automatisiert ablaufen.

**Bezugszeichenliste**

| | |
|---|---|
| 1 | Glaselement |
| 10 | Glassubstrat |
| 101, 102 | Seitenflächen von Glaselement bzw. Glassubstrat |
| 103 | Kantenfläche von Glaselement/-substrat |
| 121, 122 | Bereiche der Seitenflächen |
| 21, 22 | Beschichtungen |
| 4 | Weitere Schicht |
| 50 | Beleuchtungseinrichtung |
| 51 | Lichtstrahl |
| 52 | Kugel |
| 53 | Detektor |
| 54 | Ausgang |
| 55 | Ringsensor |
| d | Dicke der Beschichtung |
| D, B, L | Dicke, Breite, Länge des Glaselements/Glassubstrats |

## Patentansprüche

1. Scheibenförmiges Glaselement (1), umfassend ein scheibenförmiges Glassubstrat (10), mit zwei Seitenflächen (101, 102) und einer umlaufenden Kantenfläche (103), vorzugsweise gebildet aus oder umfassend Kalk-Natron-Glas, aufweisend wenigstens eine mittels Erwärmen aufgebrachte Beschichtung (21), vorzugsweise eine Emaille-Beschichtung, die auf wenigstens einer Seitenfläche (101, 102) des scheibenförmigen Glassubstrats (10) zumindest in einem Bereich (121) angeordnet ist, wobei die wenigstens eine Beschichtung (21) wenigstens einen Füllstoff umfassend temperaturstabile Partikel (3) mit einer durchschnittlichen Partikelgröße (P), vorzugsweise angegeben als d₅₀, umfasst und eine Schichtdicke (d) hat, wobei der Reibkoeffizient des Glaselements (1) in dem Bereich (121), in welchem die wenigstens eine Beschichtung (21) angeordnet ist, höchstens 0,7 beträgt, bevorzugt höchstens 0,6, besonders bevorzugt weniger als 0,6, ganz besonders bevorzugt höchstens 0,5, und vorzugsweise wenigstens 0,07, bevorzugt wenigstens 0,1, besonders bevorzugt wenigstens 0,2.

2. Scheibenförmiges Glaselement (1) nach Anspruch 1, wobei die Seitenfläche (101, 102) des Glassubstrats (10), auf welcher die wenigstens eine mittels Erwärmen aufgebrachte Beschichtung (21) zumindest in einem Bereich (121) angeordnet ist, als betriebliche Vorder- oder Oberseite eines Hausgeräts ausgebildet und/oder bestimmt ist, in einem Hausgerät als Vorderseite oder Oberseite des Glaselements (1) verwendet zu werden.

3. Scheibenförmiges Glaselement (1) nach einem der Ansprüche 1 oder 2, wobei das Verhältnis (V) von der durchschnittlichen Partikelgröße (P) zur Schichtdicke (d) der wenigstens einen Beschichtung (21) $V = \frac{P}{d}$ höchstens 9, vorzugsweise höchstens 6, besonders bevorzugt höchstens 1,3, und wenigstens 0,01 beträgt.

4. Scheibenförmiges Glaselement (1) nach einem der Ansprüche 1 bis 3, wobei das Glaselement (1) eine Trübung, bestimmt mit dem Messgerät HAZE-GUARD plus der Firma BYK-Gardener, zwischen größer als 15 und weniger als 95, vorzugsweise größer als 15 und weniger als 60, aufweist, und/oder eine Klarheit (clarity), bestimmt mit dem Messgerät HAZE-GUARD plus der Firma BYK-Gardener, von wenigstens 6 und höchstens 50, vorzugsweise von wenigstens 15 und höchstens 35, aufweist.

5. Scheibenförmiges Glaselement (1) nach einem der Ansprüche 1 bis 4, wobei die wenigstens eine Beschichtung (21) kein Absorptionspigment umfasst und/oder wobei das Glaselement (1) eine Transmission von mehr als 60%, bevorzugt mehr als 75%, und weniger als 95 %, bevorzugt weniger als 92 %, besonders bevorzugt weniger als 90% aufweist, bestimmt in einem Bereich des Glaselements (1), in welchem nur das Glassubstrat (10) und die wenigstens eine Beschichtung (21) angeordnet sind.

6. Scheibenförmiges Glaselement (1) nach einem der Ansprüche 1 bis 3, wobei die wenigstens eine Beschichtung (21) einen Mittenrauwert, Sₐ, von größer 0,1 µm bis höchstens 2,0 µm, bevorzugt bis höchstens 1,5 µm, aufweist.

7. Scheibenförmiges Glaselement (1) nach einem der Ansprüche 1 bis 6, wobei die wenigstens eine Beschichtung (21) eine chemische Beständigkeit von höchstens 4 aufweist, bestimmt in einem Testverfahren auf chemische Beständigkeit, vorzugsweise mittels sauren und/oder salzigen wässrigen Prüflösungen.

8. Scheibenförmiges Glaselement (1) nach einem der Ansprüche 1 bis 7, aufweisend eine weitere Beschichtung (22), insbesondere eine mittels Erwärmen aufgebrachte weitere Beschichtung, vorzugsweise eine Emaille-Beschichtung, wobei die wenigstens eine Beschichtung (21) und die weitere Beschichtung (22) auf unterschiedlichen Seitenflächen (101, 102) des Glassubstrats (10) angeordnet sind.

9. Scheibenförmiges Glaselement (1) nach einem der Ansprüche 1 bis 8, wobei die wenigstens eine Beschichtung (21) als Emaillebeschichtung umfassend einen Glasfluss ausgebildet ist, wobei der Glasfluss bevorzugt Bi₂O₃ und ZnO umfasst, besonders bevorzugt aufweisend eines oder beide der folgenden Merkmale:
- der Glasfluss weist ein Verhältnis von Bi₂O₃/ZnO, bezogen auf den Gewichtsanteil des Glasflusses, von mehr als 1,3, bevorzugt von wenigstens 1,5, insbesondere von wenigstens 5, und vorzugsweise von weniger als 35, bevorzugt von weniger als 30 auf,
- der Glasfluss weist ein Verhältnis von der Summe von SiO₂ und Bi₂O₃ zu ZnO, (SiO₂+Bi₂O₃) / ZnO, von wenigstens 4,0 und vorzugsweise höchstens 45 auf.

10. Scheibenförmiges Glaselement (1) nach einem der Ansprüche 1 bis 9, wobei die wenigstens eine Beschichtung (21) wenigstens 0,1 Gew.-% und vorzugsweise höchstens 35 Gew.-% Füllstoff, vorzugsweise höchstens 30 Gew.-% Füllstoff, und bevorzugt 0,2 Gew.-% bis höchstens 20 Gew.-%, besonders bevorzugt 0,4 Gew.-% bis höchstens 10 Gew.-%, bezogen auf den Feststoffgehalt der wenigstens einen Beschichtung (21) umfasst, wobei für den Fall, dass die wenigstens eine Beschichtung (21) mehr als einen Füllstoff umfasst, der Gesamtgehalt an Füllstoff betrachtet ist.

11. Scheibenförmiges Glaselement (1) nach einem der Ansprüche 1 bis 10, wobei die temperaturstabilen Partikel (3) eine durchschnittliche Partikelgröße, vorzugsweise angegeben als d₅₀, von höchstens 3,0 µm, bevorzugt höchstens 1,2 µm, besonders bevorzugt höchstens 1,0 µm, aufweisen, wobei eine bevorzugte Untergrenze der durchschnittlichen Partikelgröße, vorzugsweise angegeben als d₅₀, wenigstens 0,01 µm, vorzugsweise wenigstens 0,03 µm betragen kann.

12. Scheibenförmiges Glaselement (1) nach einem der Ansprüche 1 bis 11, wobei die wenigstens eine Beschichtung (21) einen weiteren Füllstoff umfassend temperaturstabile Partikel (3) umfasst, wobei die durchschnittliche Partikelgröße, vorzugsweise angegeben als d₅₀, des weiteren Füllstoffs, von der des wenigstens einen Füllstoffs verschieden ist und wobei vorzugsweise die durchschnittliche Partikelgröße, vorzugsweise angegeben als d₅₀, beider Füllstoffe höchstens 3,0 µm, bevorzugt höchstens 1,2 µm, besonders bevorzugt höchstens 1,0 µm, beträgt, wobei eine bevorzugte Untergrenze der durchschnittlichen Partikelgröße, vorzugsweise angegeben als d₅₀, wenigstens 0,01 µm, vorzugsweise wenigstens 0,03 µm betragen kann.

13. Scheibenförmiges Glaselement (1) nach einem der Ansprüche 1 bis 12, wobei das scheibenförmige Glaselement (1) thermisch vorgespannt ist.

14. Scheibenförmiges Glaselement (1) nach einem der Ansprüche 1 bis 13, aufweisend wenigstens eines der folgenden Merkmale:
- der wenigstens eine Füllstoff ist aus SiO₂ ausgebildet oder umfasst SiO₂, wobei vorzugsweise alle der von der wenigstens einen Beschichtung (21) umfassten Füllstoffe aus SiO₂ ausgebildet sind oder SiO₂ umfassen;
- die wenigstens eine Beschichtung (21, 22) umfasst wenigstens ein Pigment, wobei das Pigment vorzugsweise nicht als Absorptionspigment ausgebildet ist, und wobei besonders bevorzugt das wenigstens eine Pigment ein Effektpigment ist oder umfasst;
- die wenigstens eine Beschichtung (21) umfasst keine Füllstoffe umfassend temperaturstabile Partikel (3), welche eine durchschnittliche Partikelgröße, vorzugsweise angegeben als d₅₀, von mehr als 3,0 µm, bevorzugt mehr als 1,2 µm, besonders bevorzugt von mehr als 1,0 µm, aufweisen;
- die wenigstens eine Beschichtung (21) umfasst ein Bindemittel, bevorzugt ein glasbasiertes Bindemittel, besonders bevorzugt eine Glasfritte oder einen Glasfluss, wobei ganz besonders bevorzugt der Gehalt an Bindemittel, bezogen auf den Feststoffgehalt der wenigstens einen Beschichtung (21), wenigstens 35 Gew.-%, insbesondere wenigstens 40 Gew.-%, und vorzugsweise höchstens 95 Gew.-%, bevorzugt höchstens 92 Gew.-% beträgt;
- das Glaselement umfasst wenigstens zwei Beschichtungen (21, 22) auf unterschiedlichen Seitenflächen (101, 102) des Glassubstrats (10), welche mittels Erwärmen aufgebracht sind, und beide Beschichtungen (21, 22) umfassen vorzugsweise wenigstens einen Füllstoff umfassend temperaturstabile Partikel (3) mit einer durchschnittlichen Partikelgröße, vorzugsweise angegeben als d₅₀, und haben eine Schichtdicke (d), wobei das Verhältnis (V) von der durchschnittlichen Partikelgröße (P) zur Schichtdicke (d, d₁, d₂) der Beschichtungen (21, 22) $V = \frac{P}{d}$ höchstens 9, vorzugsweise höchstens 6, besonders bevorzugt höchstens 1,3, und wenigstens 0,01 beträgt, wobei der wenigstens eine Füllstoff in der wenigstens einen Beschichtung (21) und der wenigstens eine Füllstoff in der weiteren Beschichtung (22) identisch sein können;
- das Glaselement umfasst zwei Beschichtungen (21, 22) auf unterschiedlichen Seitenflächen (101, 102) des Glassubstrats (10), welche mittels Erwärmen aufgebracht sind, und zwischen wenigstens einer der mittels Erwärmen aufgebrachte Beschichtungen (21, 22) und einer der beiden Seitenflächen (101, 102) des scheibenförmigen Glassubstrats (10) ist wenigstens eine weitere Beschichtung aufgebracht
- das Glaselement umfasst zwei Beschichtungen (21, 22) auf unterschiedlichen Seitenflächen (101, 102) des Glassubstrats (10), welche mittels Erwärmen aufgebracht sind, und wenigstens eine Beschichtung (21, 22) umfasst wenigstens ein Pigment
- die Schichtdicke (d) der wenigstens einen Beschichtung (21) ist größer oder gleich 3 µm und vorzugsweise kleiner als 10 µm, bevorzugt kleiner als 8 µm.

15. Hausgerät, beispielsweise Backofen und/oder Kamin und/oder Herd, umfassend ein scheibenförmiges Glaselement (1) nach einem der Ansprüche 1 bis 14, wobei die Seitenfläche (101, 102) des Glassubstrats (10), auf welcher die wenigstens eine mittels Erwärmen aufgebrachte Beschichtung (21) aufgebracht ist, auf der Außenseite des Hausgeräts angeordnet ist.

16. Verwendung eines scheibenförmigen Glaselements (1) nach einem der Ansprüche 1 bis 14 als Sichtscheibe und/oder Bedienblende, beispielsweise in einem Hausgerät, wie einem Backofen und/oder einem Kamin und/oder einem Herd, oder als Bestandteil in einem Sicherheitsglaslaminat, und/oder als Kochfläche und/oder als Frontscheibe in einem Möbel und/oder einem elektrischen Gerät und/oder als Scheibenelement in der Innen- und/oder Außenarchitektur.
